# EUROPEAN PATENT SPECIFICATION

(11) **EP 3 469 466 B1**
(45) Date of publication and mention of the grant of the patent: **20.10.2021**
(21) Application number: 17726808.3
(22) Date of filing: 18.05.2017
(51) Int. Cl.: G06F 3/033, A63F 13/26, A63F 13/245, A63F 13/42, A63F 13/21, A63F 13/837

(54) **DIRECTIONAL INTERFACE OBJECT**
RICHTUNGSSCHNITTSTELLENOBJEKT
OBJET À INTERFACE DIRECTIONNELLE

(30) Priority: 11.06.2016 US 201662348859 P; 30.09.2016 US 201615283110
(43) Date of publication of application: 17.04.2019
(73) Proprietor: Sony Interactive Entertainment Inc., Tokyo 108-0075 (JP)
(72) Inventor: ROGERS, Mark, San Mateo CA 94404 (US); CHUNG, Dana, San Mateo CA 94404 (US); BRUCKBOCK, Tom, San Mateo CA 94404 (US); SUMII, Tetsu, San Mateo CA 94404 (US); NOKUO, Taichi, San Mateo CA 94404 (US); LUISI, Seth, San Mateo CA 94404 (US)
(74) Representative: D Young & Co LLP
(86) International application number: PCT/US2017/033358
(87) International publication number: WO 2017/213818

(56) References cited:
- EP-A1- 2 446 943
- US-A1- 2008 316 181
- US-A1- 2010 173 686
- US-A1- 2012 122 576
- US-A1- 2012 190 448
- US-A1- 2016 054 797

## Description

### 1. Field of the Disclosure

The present disclosure relates to an interface object for gameplay of a video game, and more specifically, wherein the video game defines virtual reality (VR) environment content presented in head mounted displays (HMDs), and related methods and systems.

### BACKGROUND

### 2. Description of the Related Art

The video game industry has seen many changes over the years. As computing power has expanded, developers of video games have likewise created game software that takes advantage of these increases in computing power. To this end, video game developers have been coding games that incorporate sophisticated operations and mathematics to produce very detailed and engaging gaming experiences.

Example gaming platforms include the Sony PlayStation®, Sony Playstation2® (PS2), Sony Playstation3® (PS3), and Sony Playstation4® (PS4), each of which is sold in the form of a game console. As is well known, the game console is designed to connect to a display (typically a television) and enable user interaction through handheld controllers. The game console is designed with specialized processing hardware, including a CPU, a graphics synthesizer for processing intensive graphics operations, a vector unit for performing geometry transformations, and other glue hardware, firmware, and software. The game console may be further designed with an optical disc reader for receiving game discs for local play through the game console. Online gaming is also possible, where a user can interactively play against or with other users over the Internet. As game complexity continues to intrigue players, game and hardware manufacturers have continued to innovate to enable additional interactivity and computer programs.

A growing trend in the computer gaming industry is to develop games that increase the interaction between the user and the gaming system. One way of accomplishing a richer interactive experience is to use wireless game controllers whose movement is tracked by the gaming system in order to track the player's movements and use these movements as inputs for the game. Generally speaking, gesture input refers to having an electronic device such as a computing system, video game console, smart appliance, etc., react to some gesture made by the player and captured by the electronic device.

Another way of accomplishing a more immersive interactive experience is to use a head-mounted display. A head-mounted display is worn by the user and can be configured to present various graphics, such as a view of a virtual space. The graphics presented on a head-mounted display can cover a large portion or even all of a user's field of view. Hence, a head-mounted display can provide a visually immersive experience to the user.

It is in this context that embodiments of the disclosure arise. Previously proposed arrangements are disclosed by US 2012/122576 A1, US 2012/190448 A1, US 2010/173686 A1, US 2016/054797 A1, EP 2 446 943 A1 and US 2008/316181 A1.

### SUMMARY

The present disclosure is defined by the appended claims. Embodiments of the present disclosure include a directional interface object and a system relating to a directional interface object used for interaction in a virtual reality (VR) environment, such as during gameplay of a video game. The VR environment can be presented via a head-mounted display (HMD), and the interface object may include features for detecting which hands are grasping different portions of the directional interface object. Therefore, the virtual hands in the VR environment which correspond to the user's hand can be configured to properly show which hand is holding which part of a corresponding item in the VR environment (e.g. a weapon or gun). Furthermore, changes in the hand pose when holding the directional interface object can be reflected in the user's corresponding view of the VR environment.

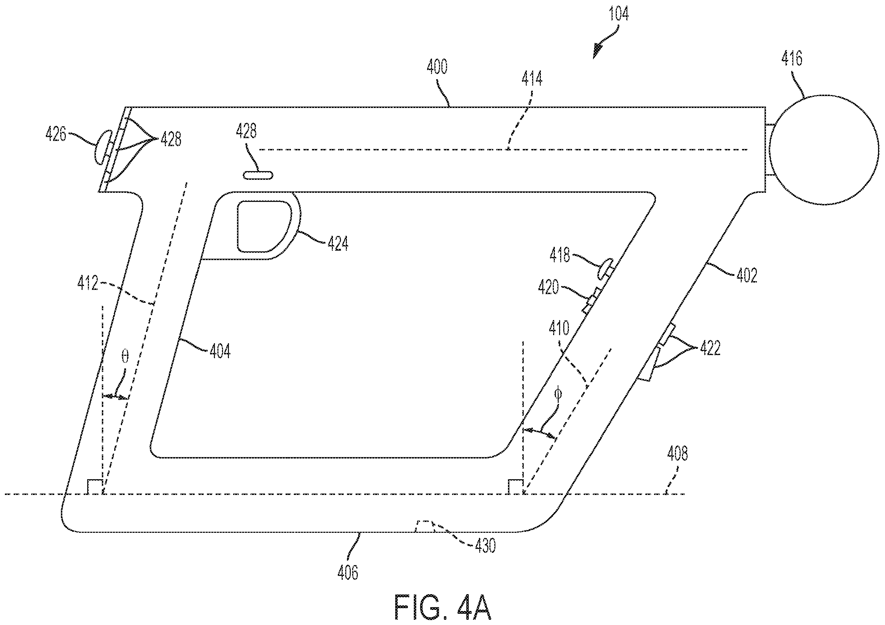

The directional interface object of the present invention is as specified in claim 1, with support in figures 4A, 5A, 5B and 6.

Other aspects and advantages of the disclosure will become apparent from the following detailed description, taken in conjunction with the accompanying drawings, illustrating by way of example the principles of the disclosure.

### BRIEF DESCRIPTION OF THE DRAWINGS

The disclosure may be better understood by reference to the following description taken in conjunction with the accompanying drawings in which:
Figure 1 illustrates a system for interactive gameplay of a video game;
Figures 2A-1 and 2A-2 illustrate a head-mounted display (HMD);
Figure 2B illustrates one example of an HMD user interfacing with a client system, and the client system providing content to a second screen display, which is referred to as a second screen;
Figure 3 conceptually illustrates the function of an HMD in conjunction with an executing video game;
Figure 4A illustrates a side view of directional interface object 104;
Figures 4B and 4C illustrate additional perspective views of the directional interface object 104;
Figure 5A illustrates a directional interface object having a plurality of touch sensors;
Figure 5B illustrates a plurality of graphs showing the amount of contact as measured by the aforementioned touch sensors on the sides of the front and rear tubular portions of the directional interface object;
Figure 5C illustrates a method for rendering the appropriate virtual hand in a VR environment corresponding to a user's actual hand;
Figure 6 illustrates changes in fingers of a user's hand touching a touch sensor and corresponding changes in a rendering of a virtual hand;
Figure 7 illustrates a directional interface object having a plurality of lights to facilitate tracking of the directional interface object;
Figure 8 illustrates a directional interface object having a movable weight;
Figure 9 illustrates a user 100 using an HMD 102 to view a VR environment;
Figure 10 illustrates a user 100 using an HMD 102 to view a VR environment;
Figure 11 illustrates a user viewing a VR environment using an HMD;
Figure 12 is a diagram illustrating components of a directional interface object 104;
Figure 13 illustrates components of a head-mounted display; and
Figure 14 is a block diagram of a Game System 1400.

### DETAILED DESCRIPTION

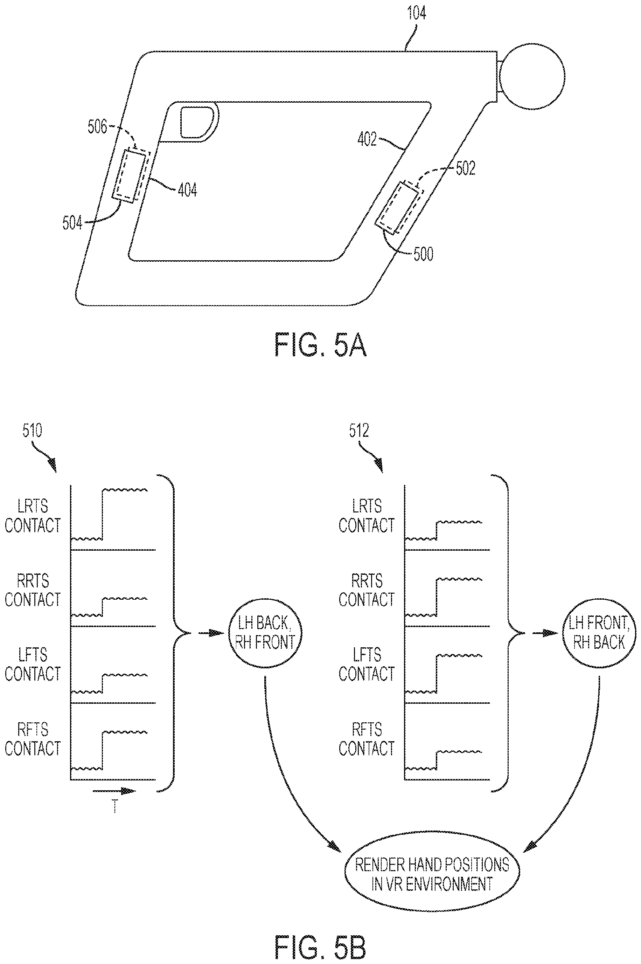

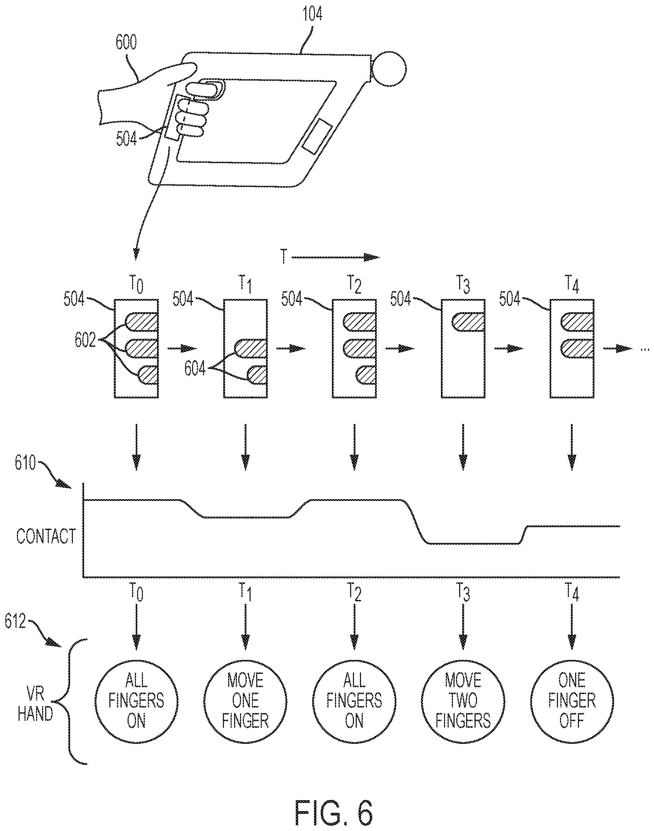

The following implementations provide devices, methods, and systems relating to a directional interface object for providing input to an interactive application, such as a video game. Various example implementation details are provided, some by way of background information and some by way of features which are either representative of or at least compatible with embodiments of the invention as defined by the appended claims. Particular examples of the claimed arrangements are discussed below with reference to Figures 5A-5C and 6.

In various examples, the methods, systems, image capture objects, sensors and associated interface objects (e.g., gloves, controllers, peripheral devices, etc.) are configured to process data that is configured to be rendered in substantial real time on a display screen. The display may be the display of a head mounted display (HMD), a display of a second screen, a display of a portable device, a computer display, a display panel, a display of one or more remotely connected users (e.g., whom may be viewing content or sharing in an interactive experience), or the like.

It will be obvious, however, to one skilled in the art, that the present disclosure may be practised without some or all of these specific details. In other instances, well known process operations have not been described in detail in order not to unnecessarily obscure the present disclosure.

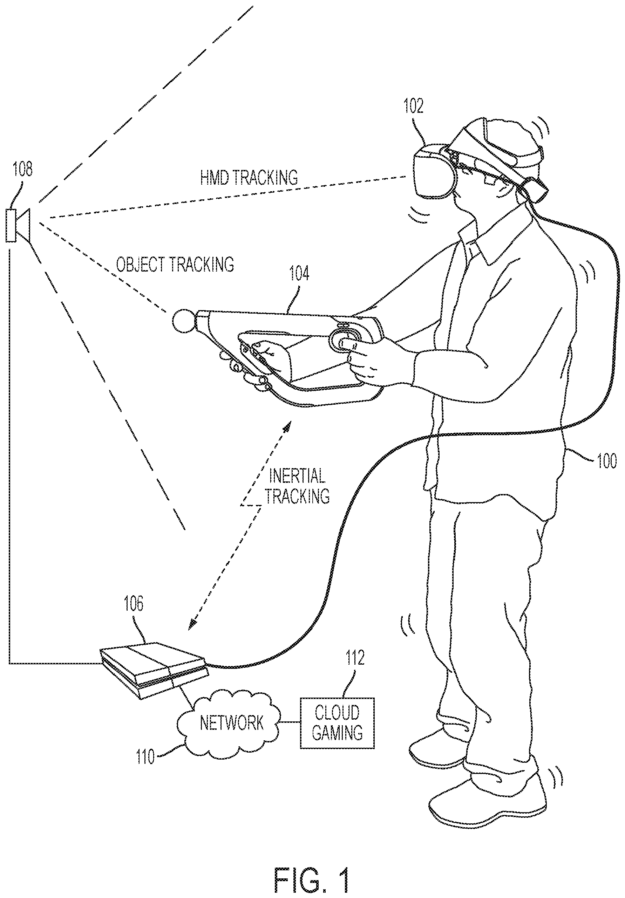

Figure 1 illustrates an example system for interactive gameplay of a video game. A user 100 is shown wearing a head-mounted display (HMD) 102. The HMD 102 is worn in a manner similar to glasses, goggles, or a helmet, and is configured to display a video game or other content to the user 100. The HMD 102 provides a very immersive experience to the user by virtue of its provision of display mechanisms in close proximity to the user's eyes. Thus, the HMD 102 can provide display regions to each of the user's eyes which occupy large portions or even the entirety of the field of view of the user.

For example, the HMD 102 can be connected to a computer 106. The connection to computer 106 can be wired or wireless. The computer 106 can be any general or special purpose computer known in the art, including but not limited to, a gaming console, personal computer, laptop, tablet computer, mobile device, cellular phone, tablet, thin client, set-top box, media streaming device, etc. For example, the computer 106 can be configured to execute a video game, and output the video and audio from the video game for rendering by the HMD 102.

The user 100 may operate a directional interface object 104 to provide input for the video game. Additionally, a camera 108 can be configured to capture images of the interactive environment in which the user 100 is located. These captured images can be analyzed to determine the location and movements of the user 100, the HMD 102, and the directional interface object 104. In various examples, the directional interface object 104 includes a light which can be tracked, and/or inertial sensor(s), to determine its location and orientation.

The way the user interfaces with the virtual reality scene displayed in the HMD 102 can vary, and other interface devices in addition to directional interface object 104, can be used. For instance, single-handed controllers can also be used, as well as two-handed controllers. In some examples, the controllers can be tracked themselves by tracking lights associated with the controllers, or tracking of shapes, sensors, and inertial data associated with the controllers. Using these various types of controllers, or even simply hand gestures that are made and captured by one or more cameras, it is possible to interface, control, maneuver, interact with, and participate in the virtual reality environment presented on the HMD 102.

Additionally, the HMD 102 may include one or more lights which can be tracked to determine the location and orientation of the HMD 102. The camera 108 can include one or more microphones to capture sound from the interactive environment. Sound captured by a microphone array may be processed to identify the location of a sound source. Sound from an identified location can be selectively utilized or processed to the exclusion of other sounds not from the identified location. Furthermore, the camera 108 can be defined to include multiple image capture devices (e.g. stereoscopic pair of cameras), an IR camera, a depth camera, and combinations thereof.

In other examples, the computer 106 functions as a thin client in communication over a network with a cloud gaming provider 112. The cloud gaming provider 112 maintains and executes the video game being played by the user 102. The computer 106 transmits inputs from the HMD 102, the directional interface object 104 and the camera 108, to the cloud gaming provider, which processes the inputs to affect the game state of the executing video game. The output from the executing video game, such as video data, audio data, and haptic feedback data, is transmitted to the computer 106. The computer 106 may further process the data before transmission or may directly transmit the data to the relevant devices. For example, video and audio streams are provided to the HMD 102, whereas a vibration feedback command is provided to the directional interface object 104.

In some examples, the HMD 102, directional interface object 104, and camera 108, may themselves be networked devices that connect to the network 110 to communicate with the cloud gaming provider 112. For example, the computer 106 may be a local network device, such as a router, that does not otherwise perform video game processing, but which facilitates passage of network traffic. The connections to the network by the HMD 102, directional interface object 104, and camera 108 may be wired or wireless.

Additionally, though some of the present example arrangements may be described with reference to a head-mounted display, it will be appreciated that instead, non-head mounted displays may be substituted, including without limitation, a television, projector, LCD display screen, portable device screen (e.g. tablet, smartphone, laptop, etc.) or any other type of display that can be configured to render video and/or provide for display of an interactive scene or virtual environment.

Example arrangements can relate to a directional interface object 104, as shown in Figure 1. As illustrated, the user 100 is capable of holding the directional interface object 104 in a comfortable position with a left hand holding the trigger and the right hand holding a front-most section of the directional interface object 104. In some examples, the left hand is configured to hold the trigger, so as to select, and/or fire a virtual weapon or pointing device, when interfacing with a virtual-reality space. The right hand, when placed on the body of the directional interface object 104, provides a way for the user's thumb to access control inputs. The control inputs include, for example, a joystick that may be used to control a virtual user being viewed by the HMD 102 of user 100. For instance, the joystick when push forward may allow a virtual user to move forward or navigate to the left to the right and in different directions within the virtual environment.

Other selection buttons that can be controlled by the right hand, e.g. the thumb, may be a share button. Other buttons may also be located for easy access by the right hand thumb, such as directional buttons, for a directional pad. For the user's left hand, the user's thumb can access a rear input joystick. The rear input joystick sits above the thumb of the left hand, while the hand is holding the trigger. As discussed below, the buttons that are disposed near the left hands thumb area, or rear portion of the directional object interface 104, can include the joystick, and other buttons typically laid-out on a controller. For example, the buttons can include a triangle button, a square button, a circle button, and X button, which are disposed around a joystick. In other examples, buttons that are common to various other game console controllers, and non-game console controllers can be integrated onto the directional interface object 104. It should be understood that the button locations can also be moved around, and more or fewer buttons can be provided.

It should also be understood that the input devices can include touch screens, video screens, and other types of sensors and inputs. In one particular example, the left hand thumb while holding the trigger can also interface with these other buttons. The directional interface object 104 includes an inertial sensor integrated therein, which allows for information regarding inertial tracking to be communicated with computer 106. For example, it is possible to perform all processing on the HMD 102, and the inertial tracking of the directional object interface 104, can be processed by circuitry of the HMD 102. In other examples, inertial data can be transferred to a cloud gaming system 112, over network 110. For instance, the game execution rendered on the HMD 102 can be executed in cloud gaming 112, and communicated back to the display of the HMD 102. In one configuration, the camera 108 facing the user 100, may track the HMD 102 and also track the directional interface object 104.

As mentioned below, the tracking can be achieved by monitoring captured image frames of the scene in which the user 100 is playing, which can detect the position of the HMD 102, and the directional interface object 104. One example includes having an illuminated object near the front portion of the directional interface object 104. The illumination object may be, for example, a ball that lights up in a glowing manner. In one example configuration, the color of the ball can change depending on the user. For instance, if multiple users are playing a game in a particular location, the illuminated ball will light up in different colors, so as to differentiate different players.

In one example, the directional interface object 104 is defined by a unitary body, which wraps around the handle portion where a trigger is located, and a distal handle location opposite the trigger. In some examples, sensors may be provided on the surface of the directional interface object 104, to detect when a user's hands are contacting the surfaces of the body. The sensors, for example, can detect when a user is holding the directional interface object 104 with a left hand on the trigger or a right hand on the trigger. Typically, depending on whether the user is right-handed or left-handed, the user will hold the directional interface object 104 in a manner that is most comfortable. For example, the sensors may determine which hand is holding the trigger.

As described below, it may be possible to compare the amount of surface area that is holding the trigger area versus the front handle. If more surface area is being covered by the user's hand when the user's hand is in a gripping position, on a particular side, that may be indicative of the way the user is holding the directional interface object 104. In the example of Figure 1, the left hand is holding the trigger and the right hand is holding the front portion/handle. If the sensor on the left side of the trigger area detects more contact with the user's hand, that may be indicative that the left hand is holding the trigger. If the sensor on the right side of the trigger area detects more contact with the user's hand that may be indicative that the right hand is holding the trigger. Detecting the manner in which the user is holding the directional interface object 104 is used to provide a corresponding holding orientation of the virtual object in the virtual-reality scene viewed via the HMD 102. For instance, if the user is playing a first-person shooter game, the gun viewed through the HMD 102, which portrays the virtual reality of user 100 in the scene, will show the corresponding right-hand and left-hand holding the virtual weapon. Thus, depending on the way the directional interface object 104 is being held, the corresponding virtual reality view of the weapon will also be held in a similar fashion, which provides a more realistic and corresponding view to the user.

For example, it is possible to perform calibration operations to determine orientation of holding by the user. The calibration operations can, for example, ask the user to grip the directional interface object 104. When the gripping is occurring, the calibration operation will detect which way the directional interface object 104 is being held, and use that information to map to the virtual-reality images of the virtual object (e.g., a virtual gun). According to the invention, sensors must be disposed on the surfaces of the directional interface object 104, in proximity to the fingers of the user 100. The sensors are used to determine when user 100 is moving his or her fingers off of the surface of the object 104. For instance, if the user is moving his or her fingers off of the surface periodically, that corresponding movement can be shown on the virtual hand shown in the virtual display scene. That is, if the user 100 wiggles his fingers below the trigger, the virtual hands in the virtual-reality scene as viewed through the HMD 102 will also wiggle fingers in the hand that correspond to the trigger hand.

The fingers that will be wiggled or moved in the virtual-reality scene will probably not correspond directly to the same fingers being moved on the directional interface object 104, but to the user 100, some movement of the fingers in the virtual-reality scene will correspond to the user's knowledge that he or she is moving his/her fingers on the physical directional interface object 104.

This provides for a more realistic feeling and sensation when viewing the generated virtual-reality gun in the virtual reality scene, as viewed through the HMD 102. In other examples which are not part of the present invention, the determination of whether the user is holding the directional interface object with the right hand on the trigger or the left hand on the trigger can be provided by way of an input setting. The input setting can be set during an initialization state, during calibration, or if the user decides to change the holding orientation of the directional interface object 104, during the game play. In further examples, the detection can be dynamic, and can be automatically set during gameplay. For instance, if the detection is automatic, if the user sets down the directional interface object 104 temporarily, and then picks it up with the opposite hands, the system will detect that automatically and display the correct orientation to the user in the HMD 102. In further examples, it may be possible to provide additional sensors throughout the body of the directional interface object 104. The other sensors may be placed in different sectors or segments of the body, to determine when the user no longer is holding the active trigger area or the front control area. For instance, if the user holds the directional interface object 104 from the bottom part of the body, the system will know where the user is holding the directional interface object 104.

By way of example, by detecting which location the user is holding the directional interface object 104, it is possible to use the directional interface object 104 in various other configurations for gameplay that is not a shooting or pointing game or navigation function. For example, the body of the directional interface object 104, can be used to interface with other users in a same co-located space. For instance, it is possible for the HMD user 100 to allow the spectator to hold or pull on a portion of the directional interface object 104, which can provide other interface or control. Therefore, by allowing the placement of sensors throughout the body to detect touch, grasping, tapping, rubbing, pairing contact, or any other type of physical or proximity input, detection of use or gameplay or interface functions can be determined. For example, the directional interface object 104 can be paired to other input devices, such as an HMD 102. In one configuration, it is possible to pair the devices by tapping the devices together. It may be also possible to pair the devices by pulling on the trigger when the pairing is determined to be needed.

It is also possible to pair devices when they become close in proximity to one another. For example, if the user is holding the directional interface object 104 within 2 or 3 feet of the HMD 102, it is assumed that the devices should be paired together. For example, pairing of the devices can be processed by algorithms that automatically perform in the background. In other examples, the pairing can include navigating screens or menus or user interfaces presented in the HMD 102. In some examples, the user can select interfaces, buttons, navigation, or other input in the HMD 102, by pointing the directional interface object 104 at those icons, content, or scenes and then selecting by pushing a button, the trigger, multiple buttons, or providing some gesture input.

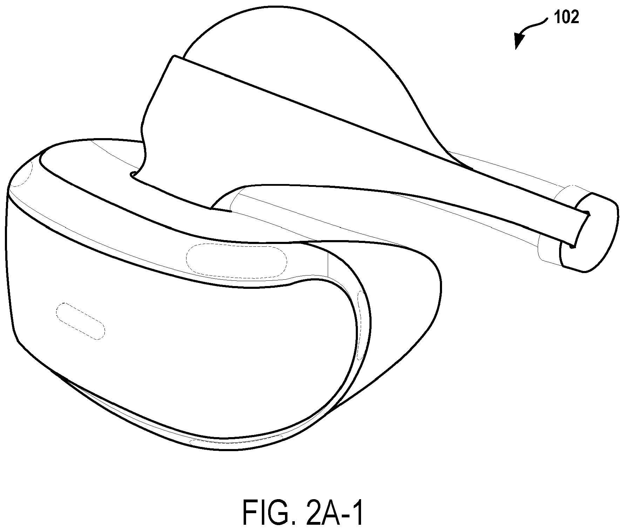

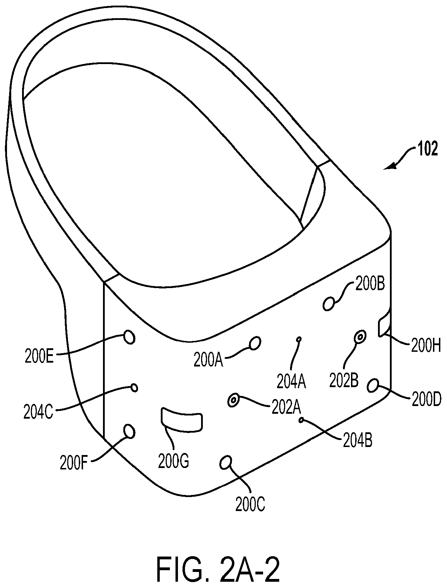

Figures 2A-1 and 2A-2 illustrate a head-mounted display (HMD). Figure 2A-1 in particular illustrates the PlayStation® VR headset, which is one example of a HMD. As shown, the HMD 102 includes a plurality of lights 200A-H. Each of these lights may be configured to have specific shapes, and can be configured to have the same or different colors. The lights 200A, 200B, 200C, and 200D are arranged on the front surface of the HMD 102. The lights 200E and 200F are arranged on a side surface of the HMD 102. And the lights 200G and 200H are arranged at corners of the HMD 102, so as to span the front surface and a side surface of the HMD 102. It will be appreciated that the lights can be identified in captured images of an interactive environment in which a user uses the HMD 102. Based on identification and tracking of the lights, the location and orientation of the HMD 102 in the interactive environment can be determined. It will further be appreciated that some of the lights may or may not be visible depending upon the particular orientation of the HMD 102 relative to an image capture device. Also, different portions of lights (e.g. lights 200G and 200H) may be exposed for image capture depending upon the orientation of the HMD 102 relative to the image capture device.

For example, the lights can be configured to indicate a current status of the HMD to others in the vicinity. For example, some or all of the lights may be configured to have a certain color arrangement, intensity arrangement, be configured to blink, have a certain on/off configuration, or other arrangement indicating a current status of the HMD 102. By way of example, the lights can be configured to display different configurations during active gameplay of a video game (generally gameplay occurring during an active timeline or within a scene of the game) versus other non-active gameplay aspects of a video game, such as navigating menu interfaces or configuring game settings (during which the game timeline or scene may be inactive or paused). The lights might also be configured to indicate relative intensity levels of gameplay. For example, the intensity of lights, or a rate of blinking, may increase when the intensity of gameplay increases. In this manner, a person external to the user may view the lights on the HMD 102 and understand that the user is actively engaged in intense gameplay, and may not wish to be disturbed at that moment.

The HMD 102 may additionally include one or more microphones. In the illustrated example, the HMD 102 includes microphones 204A and 204B defined on the front surface of the HMD 102, and microphone 204C defined on a side surface of the HMD 102. By utilizing an array of microphones, sound from each of the microphones can be processed to determine the location of the sound's source. This information can be utilized in various ways, including exclusion of unwanted sound sources, association of a sound source with a visual identification, etc.

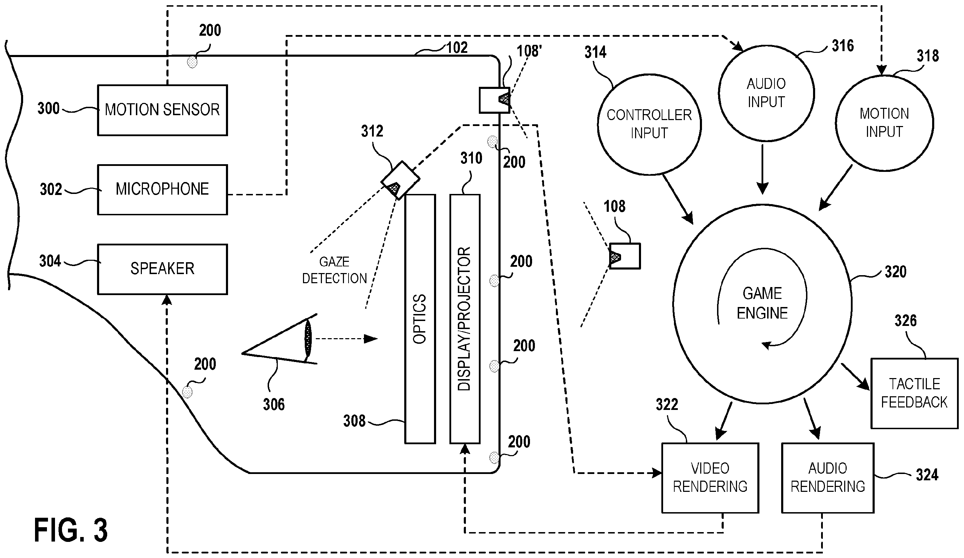

The HMD 102 may also include one or more image capture devices. In the illustrated example, the HMD 102 is shown to include image capture devices 202A and 202B. By utilizing a stereoscopic pair of image capture devices, three-dimensional (3D) images and video of the environment can be captured from the perspective of the HMD 102. Such video can be presented to the user to provide the user with a "video see-through" ability while wearing the HMD 102. That is, though the user cannot see through the HMD 102 in a strict sense, the video captured by the image capture devices 202A and 202B (e.g., or one or more front facing cameras 108' disposed on the outside body of the HMD 102, as shown in fig. 3 below) can nonetheless provide a functional equivalent of being able to see the environment external to the HMD 102 as if looking through the HMD 102. Such video can be augmented with virtual elements to provide an augmented reality experience, or may be combined or blended with virtual elements in other ways. Though in the illustrated example, two cameras are shown on the front surface of the HMD 102, it will be appreciated that there may be any number of externally facing cameras installed on the HMD 102, oriented in any direction. For example, there may alternatively be cameras mounted on the sides of the HMD 102 to provide additional panoramic image capture of the environment.

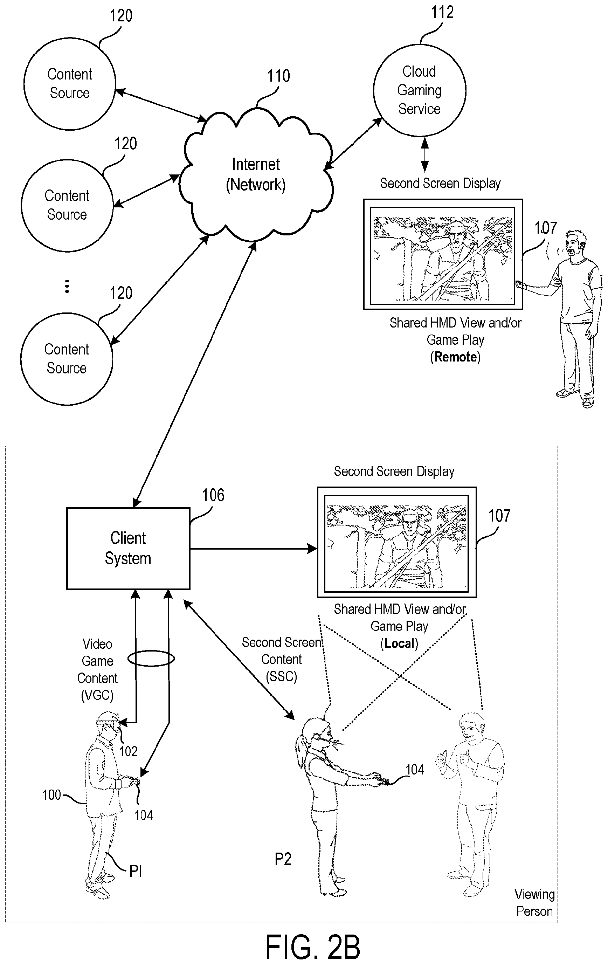

Figure 2B illustrates one example of an HMD 102 user 100 interfacing with a client system 106, and the client system 106 providing content to a second screen display, which is referred to as a second screen 107. The client system 106 may include integrated electronics for processing the sharing of content from the HMD 102 to the second screen 107. Other examples may include a separate device, module, connector, that will interface between the client system and each of the HMD 102 and the second screen 107. In this general example, user 100 is wearing HMD 102 and is playing a video game using a controller, which may also be directional interface object 104. The interactive play by user 100 will produce video game content (VGC), which is displayed interactively to the HMD 102.

For example, the content being displayed in the HMD 102 is shared to the second screen 107. In one example, a person viewing the second screen 107 can view the content being played interactively in the HMD 102 by user 100. In another example, another user (e.g. player 2) can interact with the client system 106 to produce second screen content (SSC). The second screen content produced by a player also interacting with the controller 104 (or any type of user interface, gesture, voice, or input), may be produced as SSC to the client system 106, which can be displayed on second screen 107 along with the VGC received from the HMD 102.

Accordingly, the interactivity by other users who may be co-located or remote from an HMD user can be social, interactive, and more immersive to both the HMD user and users that may be viewing the content played by the HMD user on a second screen 107. As illustrated, the client system 106 can be connected to the Internet 110. The Internet can also provide access to the client system 106 to content from various content sources 120. The content sources 120 can include any type of content that is accessible over the Internet.

Such content, without limitation, can include video content, movie content, streaming content, social media content, news content, friend content, advertisement content, etc. For example, the client system 106 can be used to simultaneously process content for an HMD user, such that the HMD is provided with multimedia content associated with the interactivity during gameplay. The client system 106 can then also provide other content, which may be unrelated to the video game content to the second screen. The client system 106 can, for example, receive the second screen content from one of the content sources 120, or from a local user, or a remote user.

Figure 3 conceptually illustrates the function of the HMD 102 in conjunction with an executing video game. The executing video game is defined by a game engine 320 which receives inputs to update a game state of the video game. The game state of the video game can be defined, at least in part, by values of various parameters of the video game which define various aspects of the current gameplay, such as the presence and location of objects, the conditions of a virtual environment, the triggering of events, user profiles, view perspectives, etc.

For example, the game engine receives, by way of example, controller input 314, audio input 316 and motion input 318. The controller input 314 may be defined from the operation of a gaming controller separate from the HMD 102, such as a handheld gaming controller (e.g. Sony DUALSHOCK®4 wireless controller, Sony PlayStation ®Move motion controller) or directional interface object 104. By way of example, controller input 314 may include directional inputs, button presses, trigger activation, movements, gestures, or other kinds of inputs processed from the operation of a gaming controller. The audio input 316 can be processed from a microphone 302 of the HMD 102, or from a microphone included in the image capture device 108 or elsewhere in the local environment. The motion input 318 can be processed from a motion sensor 300 included in the HMD 102, or from image capture device 108 as it captures images of the HMD 102. The game engine 320 receives inputs which are processed according to the configuration of the game engine to update the game state of the video game. The game engine 320 outputs game state data to various rendering modules which process the game state data to define content which will be presented to the user.

In the illustrated example, a video rendering module 322 is defined to render a video stream for presentation on the HMD 102. The video stream may be presented by a display/projector mechanism 310, and viewed through optics 308 by the eye 306 of the user. An audio rendering module 304 is configured to render an audio stream for listening by the user. For example, the audio stream is output through a speaker 304 associated with the HMD 102. It should be appreciated that speaker 304 may take the form of an open air speaker, headphones, or any other kind of speaker capable of presenting audio.

For example, a gaze tracking camera 312 is included in the HMD 102 to enable tracking of the gaze of the user. The gaze tracking camera captures images of the user's eyes, which are analyzed to determine the gaze direction of the user. For example, information about the gaze direction of the user can be utilized to affect the video rendering. For example, if a user's eyes are determined to be looking in a specific direction, then the video rendering for that direction can be prioritized or emphasized, such as by providing greater detail or faster updates in the region where the user is looking. It should be appreciated that the gaze direction of the user can be defined relative to the head mounted display, relative to a real environment in which the user is situated, and/or relative to a virtual environment that is being rendered on the head mounted display.

Broadly speaking, analysis of images captured by the gaze tracking camera 312, when considered alone, provides for a gaze direction of the user relative to the HMD 102. However, when considered in combination with the tracked location and orientation of the HMD 102, a real-world gaze direction of the user can be determined, as the location and orientation of the HMD 102 is synonymous with the location and orientation of the user's head. That is, the real-world gaze direction of the user can be determined from tracking the positional movements of the user's eyes and tracking the location and orientation of the HMD 102. When a view of a virtual environment is rendered on the HMD 102, the real-world gaze direction of the user can be applied to determine a virtual world gaze direction of the user in the virtual environment.

Additionally, a tactile feedback module 326 is configured to provide signals to tactile feedback hardware included in either the HMD 102 or another device operated by the user, such as directional interface object 104. The tactile feedback may take the form of various kinds of tactile sensations, such as vibration feedback, temperature feedback, pressure feedback, etc. The directional interface object 104 can include corresponding hardware for rendering such forms of tactile feedback.

At present, streaming services for sharing gameplay are very popular. The DualShock®4 wireless controller includes a "share button" directly on the controller to enable such sharing. As described above, there is a need to provide users the ability to spectate, e.g., watch the interactive activity being experienced by users (who may be wearing HMDs 102). For example, one HMD virtual reality player may be immersed in the activity presented in the HMD, while other persons/spectators (who may be co-located with the player, or remotely situated) may find enjoyment in watching the interactivity experienced or virtual reality scene being viewed by the HMD player. As used herein, an HMD player is one that is viewing content presented on the HMD, or can be one that is interacting with some content presented on the HMD, or can be playing a game presented on the HMD. The spectators may be wearing HMDs and so may experience an immersive effect of being in the same virtual environment as the player, thus heightening the spectator experience.

For example, a website may be provided to present users with the ability to search for different types of content or media being played by remote players, and/or select from different players, so as to watch and spectate while the player performs his or her activities. The remote players may be playing games using an HMD 102. In other examples, the remote players may be playing games or watching content using a display screen of a device or a television display screen. Broadly speaking, users wishing to watch the activity of another player that is remote, e.g., over a website, can then select specific players or types of games, or thumbnails of the games, or thumbnails of the content, to view the activity being directed by the player. Thus, a website can be provided that enables users to view and select specific interactive content that may be actively played by a remote player. The spectator wishing to view the activity by the player, can simply click on that content and begin watching. It will be appreciated that the one or both of the player and spectator may be using an HMD to view the virtual environment.

The person watching and viewing the actions by the HMD player is generally referred to as a spectator. Spectators are those persons who are given access to view the activities, interactivities, actions, movements, etc., but are not necessarily controlling the game action. For this reason, these viewers are referred to as spectators. In the context of an HMD player, the content being presented in the HMD display is dynamic and is controlled by the movements of the HMD player. For example, when the HMD player moves his or her head around, that player is presented with different content that is viewable, similar to the way real world viewing of a person's surroundings can occur.

Again, it is noted that the spectator can be local or remote to an HMD player, and can be viewing the HMD content on a second screen as described with reference to Figure 2B. Alternatively, the spectator can also be wearing an HMD, which provides spectator viewing into the HMD player content. In some examples, the spectators can be watching live or substantially live content by the HMD player. In other examples, the spectators can be watching a recorded version of the content that was viewed by the HMD player. Still further, websites can be provided that allow for multiple or even many multiples of spectators to watch the same content of the HMD player, whether live or recorded.

Figure 4A illustrates a side view of directional interface object 104. As shown, the directional interface object 104 possesses a unitary tubular structure, including a top tubular portion 400, a front tubular portion 402, a rear tubular portion 404, and a bottom tubular portion 406. The front end of the top tubular portion 402 is joined to the top end of the front tubular portion 404. The rear end of the top tubular portion 402 is joined to the top end of the rear tubular portion 404. The front end of the bottom tubular portion 406 is joined to the bottom end of the front tubular portion 402; and the rear end of the bottom tubular portion 406 is joined to the bottom end of the rear tubular portion 404.

The bottom tubular portion 406 extends along an axis 408 as illustrated. The front tubular portion 402 extends along an axis 410 that is angled in the front direction relative to normal to the axis 408 by an angle ϕ. The rear tubular portion 404 extends along an axis 412 that is angled in the front direction relative to normal to the axis 408 by an angle θ. In some examples, the angle ϕ is greater than the angle θ. In some examples, the angle ϕ is approximately the same as the angle θ.

The top tubular portion 400 extends along an axis 414, that for example may be substantially parallel to the axis 408 of the bottom tubular portion 400. In some examples, the axis 414 is not parallel to the axis 408. In some examples, the axis 414 is angled relative to the axis 408 so as to diverge in the front direction.

The directional interface object 104 includes several features and input devices to enable a user to provide input to an interactive application. For example, a trackable object 416 is included, which can be tracked based on recognition in captured images of the interactive environment in which the directional interface object 104 is disposed. The trackable object 416 can be illuminated by a light/LED included in the trackable object, and may further be illuminated to have a specific color that may differ from other objects of lights in the local environment so as to facilitate tracking of the object. The trackable object 416 in some examples can be configured to have a spherical shape. Whereas in other examples, the trackable object 416 may have any geometric or otherwise recognizable shape.

In the illustrated example, the trackable object 416 is connected to the front end of the top tubular portion 400. In some examples, the top tubular portion is configured to be tapered towards the front. That is, the diameter of the top tubular portion can be configured to decrease from back to front. This tapering of the top tubular portion can provide for greater visibility of the trackable object, for example when the directional interface object 104 is turned at an angle relative to an image capture device.

The directional interface object further includes various input devices disposed along the front tubular portion 402, including a front joystick 418 and a directional pad 420 positioned along the rear-facing side of the front tubular portion 402, and front triggers 422 positioned along the front-facing side of the front tubular portion 402.

A rear trigger 424 is positioned at the interior of the junction between the top tubular portion 400 and the rear tubular portion 404. In some examples, the rear trigger 424 is a single-stage trigger; whereas in other examples, the rear trigger 424 is a two-stage trigger, for example providing a lower resistance initial take-up coupled with a higher resistance break. A rear joystick 426 is disposed at the rear end of the top tubular portion 400, extending in the rearward direction from the rear end of the top tubular portion so as to be accessible using the thumb of the hand that grasps the rear tubular portion 404. Rear buttons 428 are additionally provided for input, including buttons that surround the rear joystick 426, and a button that is positioned along the top tubular portion 400 proximate to the rear trigger 424, so as to be accessible using the same trigger finger (index finger) of the hand that grasps the rear tubular portion 404.

The directional interface object 104 further includes a communications port 430, which in some examples, is a USB port. The communications port 430 enables a wired connection to the directional interface object 104 for communication and/or charging/power.

The configuration of the directional interface object enables two-handed use of a rigid body allowing for improved aiming accuracy and immersive simulation of a weapon in VR. The differing angles of the front and rear tubular portions (e.g. as indicated by the angles ϕ and θ) allow the player to hold the directional interface object horizontally at rest and also when aiming, which allows the directional interface object to be 'fired' comfortably from both positions.

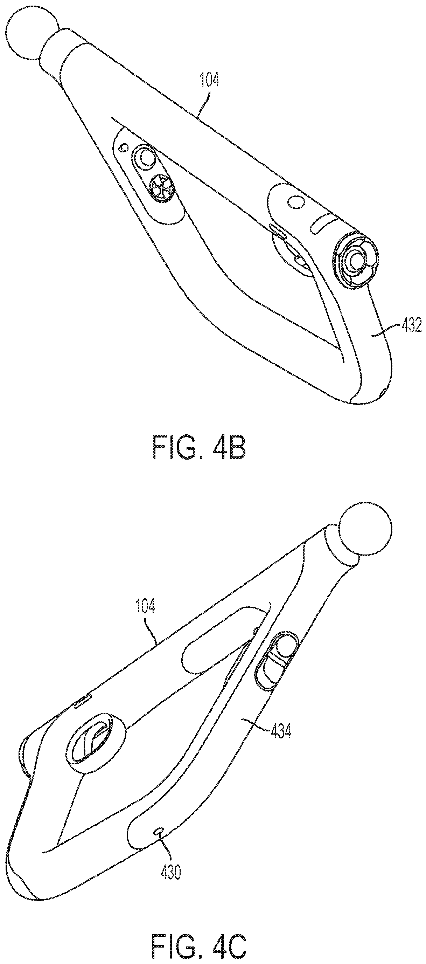

Figures 4B and 4C illustrate additional perspective views of the directional interface object 104.

For example, portions of the directional interface object 104 that will be gripped by the user may have a textured surface and/or include a pliable material to promote secure gripping by the hands of a user. For example, a portion of the rear tubular portion 404, such as the rear-facing portion 432, may be textured or include a pliable material surface. For example, a portion of the front tubular portion 402, such as the front-facing portion 434, may be textured or include a pliable material surface.

Figure 5A illustrates the directional interface object of the present invention having a plurality of touch sensors. The directional interface object 104 includes touch sensors disposed on opposite sides of the front and rear tubular portions 402 and 404. The front tubular portion 402 includes a right front touch sensor 500 disposed on a right side and a left front touch sensor 502 disposed on a left side of the front tubular portion. The rear tubular portion 404 includes a right rear touch sensor 504 disposed on a right side and a left rear touch sensor 506 disposed on a left side of the rear tubular portion.

It will be appreciated that that the touch sensors can be any kind of sensor capable of detecting contact by a user's hand. For example, the touch sensors are capacitive touch sensors. Further, in various examples, the amount of localization of contact afforded by the touch sensors can vary depending on the kind and configuration of the touch sensor. The touch sensors must be capable of detecting an amount of contact, but may not be capable of localizing the contact to a particular portion of the touch sensor. In other examples, a touch sensor may be capable of additionally localizing the contact to a particular portion of the touch sensor.

Though a specific configuration of touch sensors is shown, it should be appreciated that in other examples, the number of touch sensors and specific placement of touch sensors may vary. In some examples, a touch sensor is positioned on the front-facing portion of the front tubular portion or the rear tubular portion of the directional interface object. Furthermore, additional touch sensors may be provided to enable additional discrimination of contact between the user's hands and the directional interface object 104.

By way of example, the touch sensors can be used to detect when a user takes his hand off a portion of the directional interface object. For example, if the user takes his hand off the front portion, this can be detected and used for single-handed guns or to facilitate shooting around objects/corners in a virtual environment.

Figure 5B illustrates a plurality of graphs showing the amount of contact as measured by the aforementioned touch sensors on the sides of the front and rear tubular portions of the directional interface object. In the graph 510, the amounts of contact over time for each of the left rear touch sensor (LRTS), right rear touch sensor (RRTS), left front touch sensor (LFTS), and right front touch sensor (RFTS) are shown. The contact amounts are derived from sensor readings which indicate the detected amount of the surface of the touch sensor that is being contacted by the user's hand. As shown in the graph 510, initially the contact amounts are at a minimum level, indicating that no contact is being made with the touch sensors, which indicates that the user is not holding the directional interface object.

Subsequently, the amounts of contact increase to various degrees as shown. In the illustrated example shown by graph 510, the amount of contact detected by the LRTS increases to a higher level than that detected by the RRTS. This can indicate that the user's left hand is holding the rear tubular portion of the directional interface object, as the palm of the left hand will be expected to contact the left side and exhibit more contact than the fingers which are expected to contact the right side. Also, the amount of contact detected by the LFTS increases to a lower level than that of the RFTS. In a similar manner, this can indicate that the user's right hand is holding the front tubular portion. Thus, the foregoing pattern of contact amounts detected by the touch sensors is indicative of the user holding the rear portion of the directional interface object 104 with his/her left hand and holding the front portion of the directional interface object 1045 with his/her right hand.

The pattern of contact amounts shown by the graph 512 exhibits the opposite scenario, indicating that the user is holding the rear portion of the directional interface object 104 with his/her right hand and holding the front portion of the directional interface object 1045 with his/her left hand.

By determining which hand is holding which portion of the directional interface object, it is possible to properly render corresponding virtual hands in the VR environment. For example, the user's avatar may be holding a virtual weapon or other virtual object with virtual hands, and based on the above-described determination, the virtual right hand and virtual left hand in the VR environment will hold the virtual weapon/object in a manner matching the front/rear positioning of the user's actual right and left hands.

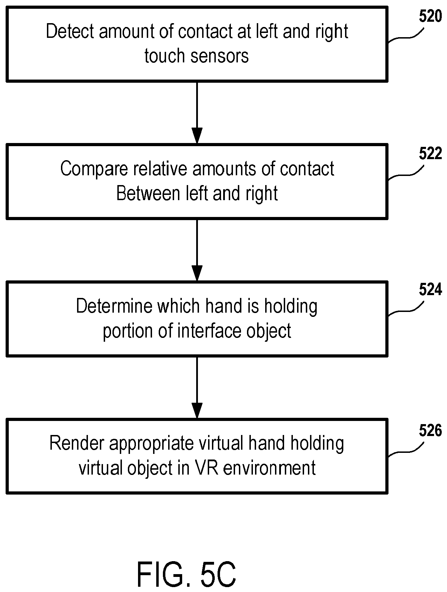

Figure 5C illustrates a method for rendering the appropriate virtual hand in a VR environment corresponding to a user's actual hand. At method operation 520, an amount of contact is detected by contact/touch sensors that are positioned on left and right (opposite) sides of a handle or portion of an interface object that is configured to be held by a user's hand. At method operation 522, the amounts of contact detected by the left and right touch sensors are compared. Based on the comparison, at method operation 524, a determination is made as to which hand is holding the portion of the interface object. Then at method operation 526, the appropriate virtual hand is rendered in the VR environment holding a virtual object in a corresponding manner to the user's actual hand. The presently described method can be applied to both hands to determine which hand is holding a front portion and which hand is holding a rear portion of an interface object, as has been described herein.

Figure 6 illustrates changes in fingers of a user's hand touching a touch sensor and corresponding changes in a rendering of a virtual hand. As shown, the user's left hand is holding the rear tubular portion of the directional interface object 104, with the fingers of the user's left hand contacting the touch sensor 504. Also shown are the contact areas on the touch sensor 504 over time. At time T₀, there are three contact areas 602 indicating three of the user's fingers touching the touch sensor 504. At time T₁, there are two contact areas 604, indicating one of the fingers has been moved away from the touch sensor. At time T₂, three contact areas are present again; at time T₃, there is one contact area; and at time T₄, there are two contact areas.

The graph 610 illustrates the contact amount detected by the touch sensor over time. As can be seen, the contact amount varies in accordance with the amount of contact areas and/or the number of fingers which are touching the touch sensor.

The touch sensor 504 does not enable determination of the number of fingers touching the sensor, but detects the amount of contact. However, based on the amount of contact, it is possible to estimate the number of fingers which are contacting the touch sensor, and based on such an estimate, the rendering of a corresponding virtual hand in the VR environment can be caused to exhibit movement of its fingers, thereby mimicking the effect of the user's movement of fingers. It will be appreciated that the specific fingers of the virtual hand which are moved may not match the actual fingers moved by the user's hand, but will nonetheless provide a visual feedback that is indicative of finger movement to the user viewing the VR environment through the HMD.

The amount of contact detected by the touch sensor when all three of the user's available fingers (not including the thumb or trigger finger in the presently described example) can be calibrated at a calibration operation, or dynamically determined over time by detecting the maximum contact amount. Decreases from the maximum can be detected and may be mapped to specific types of movements of the virtual hand. For example, a decrease in contact amount by a predefined amount can be estimated as indicative of a single finger moving, and therefore a single finger (e.g. predefined or chosen at random) of the virtual hand is moved away from touching/holding a virtual object that corresponds to the interface object. To aid in the accuracy of the determination, the contact amounts can be tracked over time to determine maximum, minimum, and intermediate values which may correspond to certain orientations of the user's fingers. Also, specific amounts of contact may correspond to specific fingers, and based on this analysis, it may be possible to estimate which finger is being moved by the user on the basis of changes in the contact amount.

Shown at reference 612 are corresponding actions for rendering of the virtual hand in the VR environment, which are based on the detected contact amount by the touch sensor. As shown, at various time points, the fingers of the virtual hand can be moved/adjusted to exhibit movements that are correlated to the movement of the user's fingers relative to the touch sensor 504.

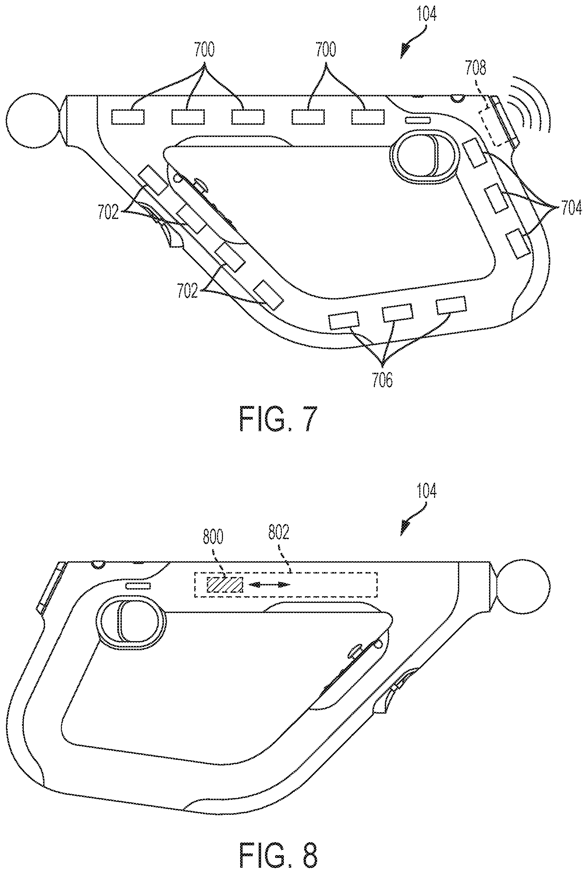

Figure 7 illustrates a directional interface object, which is not part of the present invention, having a plurality of lights to facilitate tracking of the directional interface object. As shown, a plurality of lights 700, 702, 704, and 706 are disposed along the sides of the top, front, rear, and bottom tubular portions, respectively, of the directional interface object 104. Corresponding lights may be disposed on the opposite side from that shown in the illustrated example. Furthermore, in some examples, lights may be disposed along the top, bottom, front, or rear surfaces of the various tubular portions/sections of the directional interface object 104. The various lights can be configured to display various colors to aid in tracking or differentiation of the directional interface object. It will be appreciated that the use of multiple tracking lights on the directional interface object 104 can improve both the accuracy and the range of tracking (both in terms of distance and orientation of the directional interface object relative to an image capture device). In some examples, the color and/or the intensity of one or more of the lights is configurable, and may be set or adjusted to, for example, increase contrast against the background environment, or differentiate the directional interface object from another interface object or controller (which may have lights controlled to exhibit a different color).

Additionally, a proximity sensor 708 can be disposed at the rear end of the top tubular portion of the directional interface object. The proximity sensor 708 can detect when a user's thumb is in proximity to the rear joystick 426 and/or rear buttons 428, and based on such detection, may cause the corresponding virtual hand in the VR environment to be rendered in a manner displaying its thumb moving over a corresponding portion of a virtual object (e.g. rear of a weapon or other object held by proximal hand).

Figure 8 illustrates a directional interface object, which is not part of the present invention, having a movable weight. In the illustrated example, the movable weight 800 is disposed inside of the top tubular portion of the directional interface object 104, and configured to move along a track 802. However, in other examples, the moveable weight 800 may be disposed in other portions of the directional interface object 104. The moveable weight 800 can be caused to move in response to tactile feedback data received from a computer or HMD. The moveable weight 800 can be controlled to move at variable acceleration levels, variable velocities, and for variable distances depending upon the desired haptic effect. The moveable weight 800 may be utilized to provide sensations of momentum based on events occurring in the VR environment. For example, the moveable weight may be caused to move when the user fires a virtual weapon that is controlled by the directional interface object, providing a kickback sensation similar to that of an actual weapon. In another example, when a user reloads their corresponding virtual weapon by, for example, pointing the directional interface object 104 upward, the moveable weight 800 may be caused to move so as to mimic the sensation of weapon reloading mechanics of the virtual weapon.

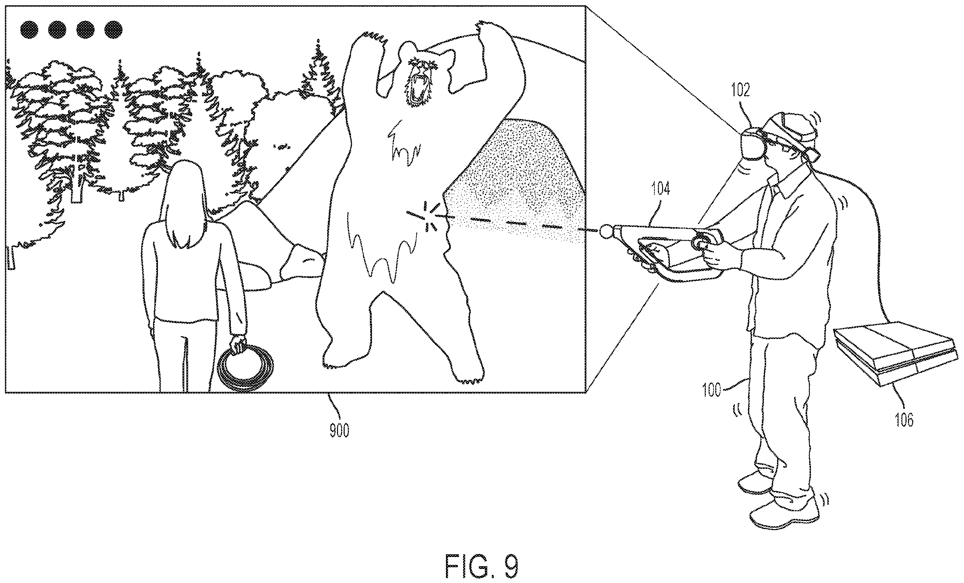

Figure 9 illustrates a user 100 using an HMD 102 to view a VR environment. The user 100 is provided with a view 900 of a VR environment, and furthermore is holding a directional interface object 104 to interact with the virtual scene. The directional interface object 104 is utilized to aim a weapon in the VR environment and shoot at objects such as the threatening bear shown in the view 900. A combination of visual tracking of the trackable object and data from inertial sensors in the directional interface object can be utilized as input to determine the pointing direction of the virtual weapon in the VR environment.

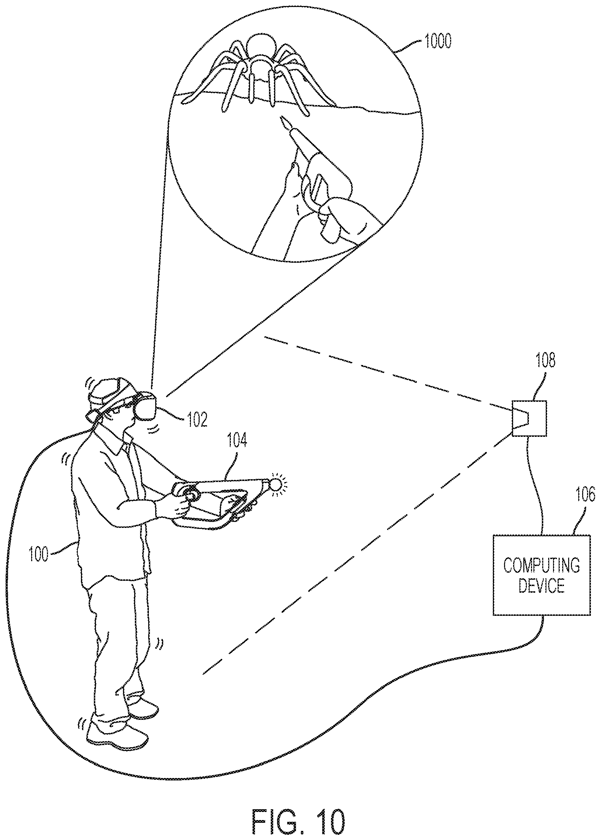

Figure 10 illustrates a user 100 using an HMD 102 to view a VR environment. The user 100 is provided with a view 1000 of the VR environment, and furthermore is holding a directional interface object 104 to interact with the virtual scene. In the view 1000, the user is able to see corresponding virtual hands holding a virtual weapon that corresponds to the directional interface object 104. The virtual hands will be configured to match the actual configuration of the user's left and right hands holding the directional interface object, such that the same virtual left/right hands are holding the front/rear of the virtual weapon as the user's actual left/right hands are holding the front/rear of the directional interface object 104. This provides the user with a sense of correspondence between their hands and the virtual hands in the VR environment.

It will be appreciated that the virtual weapon is one example of a VR representation of the directional interface object 104. In other examples, other types of virtual objects can be displayed as the VR representation of the directional interface object. Additionally, it will be appreciated that the VR representation of the directional interface object can display features that are not present on the physical device. Examples include a battery level indicator, one or more mode indicators, animated highlights to show which button to press, etc.

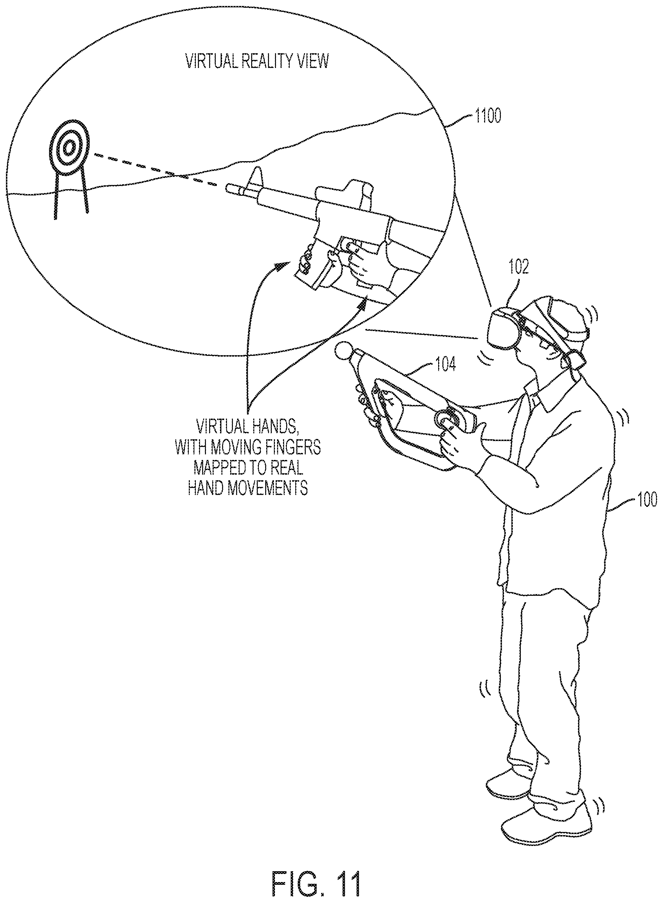

Figure 11 illustrates a user viewing a VR environment using an HMD. The user 100 is holding directional interface object 104, with his left hand holding the proximal handle and his right hand holding the distal handle of the directional interface object 104. Correspondingly in the view 1100 of the VR environment which is displayed on the HMD 102, the corresponding virtual left hand is holding the proximal handle of a virtual weapon and the virtual right hand is holding the distal handle of the virtual weapon. Moreover, the fingers of the virtual hands can be caused to move in response to detected changes in the contact of the hands with the directional interface object 104, as has been described.

Additionally, it is noted that the user's left thumb is shown over the rear end of the top portion of the directional interface object. Likewise, the virtual left hand's thumb is shown rendered in a similar position over the rear end of the top portion of the virtual weapon. This can be provided based on detection by an embedded proximity sensor at the rear end of the top portion of the directional interface object. Such a configuration is not part of the present invention.

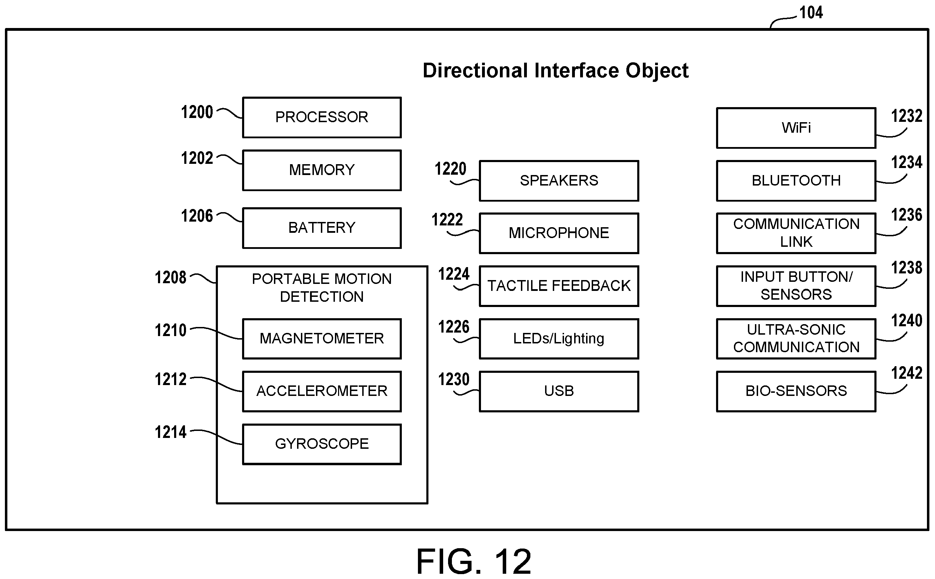

With reference to Figure 12, a diagram illustrating components of a directional interface object 104 is shown. The directional interface object 104 includes a processor 1200 for executing program instructions. A memory 1202 is provided for storage purposes, and may include both volatile and non-volatile memory. A battery 1206 is provided as a power source for the directional interface object 104. A motion detection module 1208 may include any of various kinds of motion sensitive hardware, such as a magnetometer 1210, an accelerometer 1212, and a gyroscope 1214.

The directional interface object 104 includes speakers 1220 for providing audio output. Also, a microphone 1222 may be included for capturing audio from the real environment, including sounds from the ambient environment, speech made by the user, etc. The directional interface object 104 includes tactile feedback module 1224 for providing tactile feedback to the user. For example, the tactile feedback module 1224 is capable of causing movement and/or vibration of the directional interface object 104 so as to provide tactile feedback to the user.

LEDs/lights 1226 can be provided as visual indicators of statuses of the directional interface object 104. For example, an LED may indicate battery level, power on, etc. Furthermore, the LEDs/lights can be utilized to illuminate a trackable object, such as a spherical object to facilitate visual tracking of the directional interface object. In some examples, the LEDs/lights are defined along sides of the directional interface object to facilitate tracking of the directional interface object based on image recognition. A USB interface 1230 is included as one example of an interface for enabling connection of peripheral devices, or connection to other devices, such as other portable devices, computers, etc. In various examples of the directional interface object 104, any of various kinds of interfaces may be included to enable greater connectivity of the directional interface object 104.

A WiFi module 1232 is included for enabling connection to the Internet via wireless networking technologies. Also, the directional interface object 104 includes a Bluetooth module 1234 for enabling wireless connection to other devices. A communications link 1236 may also be included for connection to other devices. For example, the communications link 1236 utilizes infrared transmission for wireless communication. In other examples, the communications link 1236 may utilize any of various wireless or wired transmission protocols for communication with other devices.

Input buttons/sensors 1238 are included to provide an input interface for the user. Any of various kinds of input interfaces may be included, such as buttons, touchpad, joystick, trackball, etc. An ultra-sonic communication module 1240 may be included in directional interface object 104 for facilitating communication with other devices via ultra-sonic technologies.

Bio-sensors 1242 are included to enable detection of physiological data from a user. For example, the bio-sensors 1242 include one or more dry electrodes for detecting bio-electric signals of the user through the user's skin.

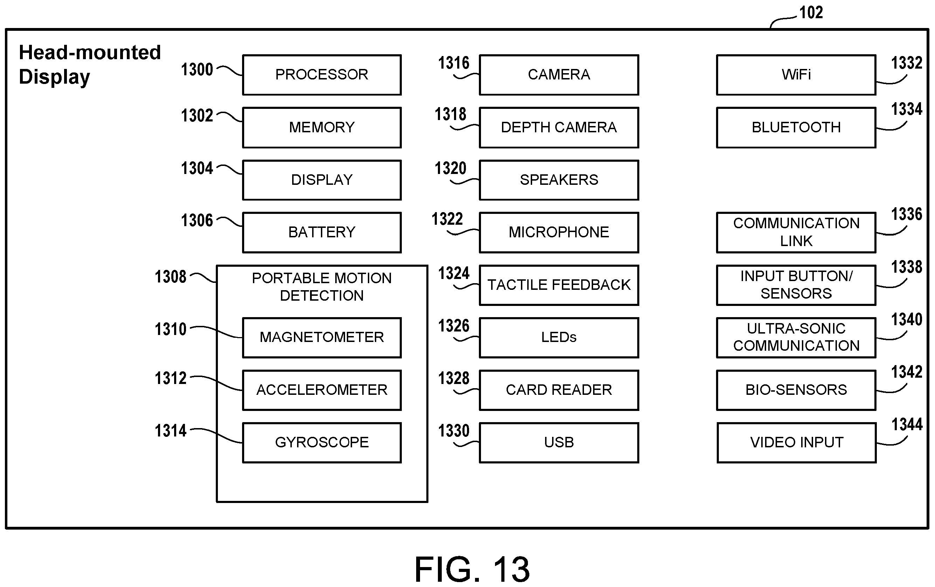

With reference to Figure 13, a diagram illustrating components of a head-mounted display 102 is shown. The head-mounted display 102 includes a processor 1300 for executing program instructions. A memory 1302 is provided for storage purposes, and may include both volatile and non-volatile memory. A display 1304 is included which provides a visual interface that a user may view. A battery 1306 is provided as a power source for the head-mounted display 102. A motion detection module 1308 may include any of various kinds of motion sensitive hardware, such as a magnetometer 1310, an accelerometer 1312, and a gyroscope 1314.

An accelerometer is a device for measuring acceleration and gravity induced reaction forces. Single and multiple axis models are available to detect magnitude and direction of the acceleration in different directions. The accelerometer is used to sense inclination, vibration, and shock. For example, three accelerometers 1312 are used to provide the direction of gravity, which gives an absolute reference for two angles (world-space pitch and world-space roll).

A magnetometer measures the strength and direction of the magnetic field in the vicinity of the head-mounted display. For example, three magnetometers 1310 are used within the head-mounted display, ensuring an absolute reference for the world-space yaw angle. For example, the magnetometer is designed to span the earth magnetic field, which is ±80 microtesla. Magnetometers are affected by metal, and provide a yaw measurement that is monotonic with actual yaw. The magnetic field may be warped due to metal in the environment, which causes a warp in the yaw measurement. If necessary, this warp can be calibrated using information from other sensors such as the gyroscope or the camera. For example, accelerometer 1312 is used together with magnetometer 1310 to obtain the inclination and azimuth of the head-mounted display 102.

For example, the magnetometers of the head-mounted display are configured so as to be read during times when electromagnets in other nearby devices are inactive.

A gyroscope is a device for measuring or maintaining orientation, based on the principles of angular momentum. For example, three gyroscopes 1314 provide information about movement across the respective axis (*x*, *y* and *z*) based on inertial sensing. The gyroscopes help in detecting fast rotations. However, the gyroscopes can drift overtime without the existence of an absolute reference. This requires resetting the gyroscopes periodically, which can be done using other available information, such as positional/orientation determination based on visual tracking of an object, accelerometer, magnetometer, etc.

A camera 1316 is provided for capturing images and image streams of a real environment. More than one camera may be included in the head-mounted display 102, including a camera that is rear-facing (directed away from a user when the user is viewing the display of the head-mounted display 102), and a camera that is front-facing (directed towards the user when the user is viewing the display of the head-mounted display 102). Additionally, a depth camera 1318 may be included in the head-mounted display 102 for sensing depth information of objects in a real environment.

The head-mounted display 102 includes speakers 1320 for providing audio output. Also, a microphone 1322 may be included for capturing audio from the real environment, including sounds from the ambient environment, speech made by the user, etc. The head-mounted display 102 includes tactile feedback module 1324 for providing tactile feedback to the user. For example, the tactile feedback module 1324 is capable of causing movement and/or vibration of the head-mounted display 102 so as to provide tactile feedback to the user.

LEDs 1326 are provided as visual indicators of statuses of the head-mounted display 102. For example, an LED may indicate battery level, power on, etc. A card reader 1328 is provided to enable the head-mounted display 102 to read and write information to and from a memory card. A USB interface 1330 is included as one example of an interface for enabling connection of peripheral devices, or connection to other devices, such as other portable devices, computers, etc. In various examples of the head-mounted display 102, any of various kinds of interfaces may be included to enable greater connectivity of the head-mounted display 102.

A WiFi module 1332 is included for enabling connection to the Internet or a local area network via wireless networking technologies. Also, the head-mounted display 102 includes a Bluetooth module 1334 for enabling wireless connection to other devices. A communications link 1336 may also be included for connection to other devices. For example, the communications link 1336 utilizes infrared transmission for wireless communication. In other examples, the communications link 1336 may utilize any of various wireless or wired transmission protocols for communication with other devices.

Input buttons/sensors 1338 are included to provide an input interface for the user. Any of various kinds of input interfaces may be included, such as buttons, touchpad, joystick, trackball, etc. An ultra-sonic communication module 1340 may be included in head-mounted display 102 for facilitating communication with other devices via ultra-sonic technologies.

Bio-sensors 1342 are included to enable detection of physiological data from a user. For example, the bio-sensors 1342 include one or more dry electrodes for detecting bio-electric signals of the user through the user's skin.

A video input 1344 is configured to receive a video signal from a primary processing computer (e.g. main game console) for rendering on the HMD. In some examples, the video input is an HDMI input.

The foregoing components of head-mounted display 102 have been described as merely exemplary components that may be included in head-mounted display 102. In various examples, the head-mounted display 102 may or may not include some of the various aforementioned components. Examples of the head-mounted display 102 may additionally include other components not presently described, but known in the art, for purposes of facilitating aspects of the present techniques as herein described.

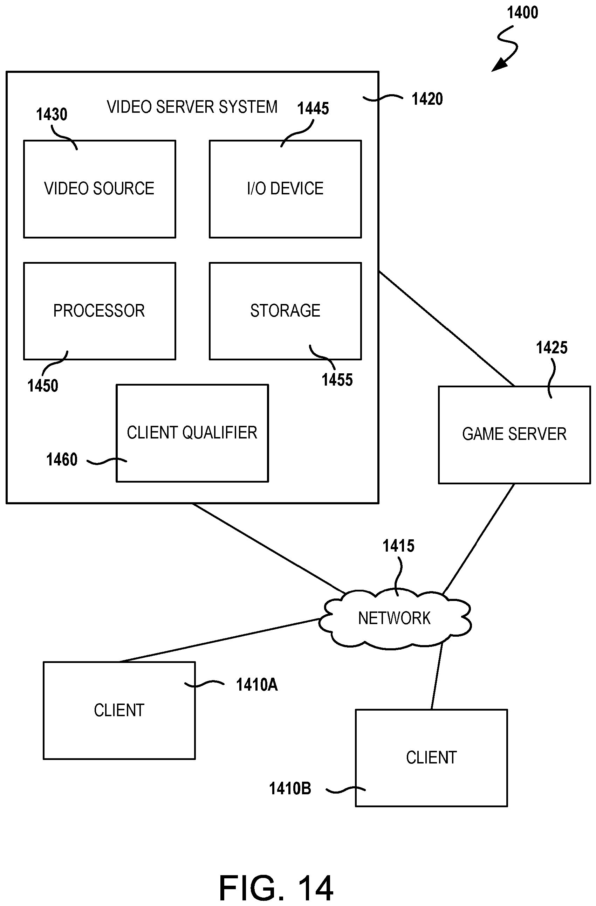

Figure 14 is a block diagram of a Game System 1400. Game System 1400 is configured to provide a video stream to one or more Clients 1410 via a Network 1415. Game System 1400 typically includes a Video Server System 1420 and an optional game server 1425. Video Server System 1420 is configured to provide the video stream to the one or more Clients 1410 with a minimal quality of service. For example, Video Server System 1420 may receive a game command that changes the state of or a point of view within a video game, and provide Clients 1410 with an updated video stream reflecting this change in state with minimal lag time. The Video Server System 1420 may be configured to provide the video stream in a wide variety of alternative video formats, including formats yet to be defined. Further, the video stream may include video frames configured for presentation to a user at a wide variety of frame rates. Typical frame rates are 30 frames per second, 60 frames per second, and 120 frames per second. Although higher or lower frame rates are included in alternative examples.

Clients 1410, referred to herein individually as 1410A., 1410B., etc., may include head mounted displays, terminals, personal computers, game consoles, tablet computers, telephones, set top boxes, kiosks, wireless devices, digital pads, stand-alone devices, handheld game playing devices, and/or the like. Typically, Clients 1410 are configured to receive encoded video streams, decode the video streams, and present the resulting video to a user, e.g., a player of a game. The processes of receiving encoded video streams and/or decoding the video streams typically includes storing individual video frames in a receive buffer of the Client. The video streams may be presented to the user on a display integral to Client 1410 or on a separate device such as a monitor or television. Clients 1410 are optionally configured to support more than one game player. For example, a game console may be configured to support two, three, four or more simultaneous players. Each of these players may receive a separate video stream, or a single video stream may include regions of a frame generated specifically for each player, e.g., generated based on each player's point of view. Clients 1410 are optionally geographically dispersed. The number of clients included in Game System 1400 may vary widely from one or two to thousands, tens of thousands, or more. As used herein, the term "game player" is used to refer to a person that plays a game and the term "game playing device" is used to refer to a device used to play a game. For example, the game playing device may refer to a plurality of computing devices that cooperate to deliver a game experience to the user. For example, a game console and an HMD may cooperate with the video server system 1420 to deliver a game viewed through the HMD. For example, the game console receives the video stream from the video server system 1420, and the game console forwards the video stream, or updates to the video stream, to the HMD for rendering.

Clients 1410 are configured to receive video streams via Network 1415. Network 1415 may be any type of communication network including, a telephone network, the Internet, wireless networks, powerline networks, local area networks, wide area networks, private networks, and/or the like. In typical examples, the video streams are communicated via standard protocols, such as TCP/IP or UDP/IP. Alternatively, the video streams are communicated via proprietary standards.

A typical example of Clients 1410 is a personal computer comprising a processor, non-volatile memory, a display, decoding logic, network communication capabilities, and input devices. The decoding logic may include hardware, firmware, and/or software stored on a computer readable medium. Systems for decoding (and encoding) video streams are well known in the art and vary depending on the particular encoding scheme used.

Clients 1410 may, but are not required to, further include systems configured for modifying received video. For example, a Client may be configured to perform further rendering, to overlay one video image on another video image, to crop a video image, and/or the like. For example, Clients 1410 may be configured to receive various types of video frames, such as I-frames, P-frames and B-frames, and to process these frames into images for display to a user. In some examples, a member of Clients 1410 is configured to perform further rendering, shading, conversion to 3-D, or like operations on the video stream. A member of Clients 1410 is optionally configured to receive more than one audio or video stream. Input devices of Clients 1410 may include, for example, a one-hand game controller, a two-hand game controller, a gesture recognition system, a gaze recognition system, a voice recognition system, a keyboard, a joystick, a pointing device, a force feedback device, a motion and/or location sensing device, a mouse, a touch screen, a neural interface, a camera, input devices yet to be developed, and/or the like.

The video stream (and optionally audio stream) received by Clients 1410 is generated and provided by Video Server System 1420. As is described further elsewhere herein, this video stream includes video frames (and the audio stream includes audio frames). The video frames are configured (e.g., they include pixel information in an appropriate data structure) to contribute meaningfully to the images displayed to the user. As used herein, the term "video frames" is used to refer to frames including predominantly information that is configured to contribute to, e.g. to effect, the images shown to the user. Most of the teachings herein with regard to "video frames" can also be applied to "audio frames."

Clients 1410 are typically configured to receive inputs from a user. These inputs may include game commands configured to change the state of the video game or otherwise affect game play. The game commands can be received using input devices and/or may be automatically generated by computing instructions executing on Clients 1410. The received game commands are communicated from Clients 1410 via Network 1415 to Video Server System 1420 and/or Game Server 1425. For example, in some examples, the game commands are communicated to Game Server 1425 via Video Server System 1420. For example, separate copies of the game commands are communicated from Clients 1410 to Game Server 1425 and Video Server System 1420. The communication of game commands is optionally dependent on the identity of the command. Game commands are optionally communicated from Client 1410A through a different route or communication channel that that used to provide audio or video streams to Client 1410A.

Game Server 1425 is optionally operated by a different entity than Video Server System 1420. For example, Game Server 1425 may be operated by the publisher of a multiplayer game. In this example, Video Server System 1420 is optionally viewed as a client by Game Server 1425 and optionally configured to appear from the point of view of Game Server 1425 to be a prior art client executing a prior art game engine. Communication between Video Server System 1420 and Game Server 1425 optionally occurs via Network 1415. As such, Game Server 1425 can be a prior art multiplayer game server that sends game state information to multiple clients, one of which is game server system 1420. Video Server System 1420 may be configured to communicate with multiple instances of Game Server 1425 at the same time. For example, Video Server System 1420 can be configured to provide a plurality of different video games to different users. Each of these different video games may be supported by a different Game Server 1425 and/or published by different entities. For example, several geographically distributed instances of Video Server System 1420 are configured to provide game video to a plurality of different users. Each of these instances of Video Server System 1420 may be in communication with the same instance of Game Server 1425. Communication between Video Server System 1420 and one or more Game Server 1425 optionally occurs via a dedicated communication channel. For example, Video Server System 1420 may be connected to Game Server 1425 via a high bandwidth channel that is dedicated to communication between these two systems.

Video Server System 1420 comprises at least a Video Source 1430, an I/O Device 1445, a Processor 1450, and non-transitory Storage 1455. Video Server System 1420 may include one computing device or be distributed among a plurality of computing devices. These computing devices are optionally connected via a communications system such as a local area network.

Video Source 1430 is configured to provide a video stream, e.g., streaming video or a series of video frames that form a moving picture. For example, Video Source 1430 includes a video game engine and rendering logic. The video game engine is configured to receive game commands from a player and to maintain a copy of the state of the video game based on the received commands. This game state includes the position of objects in a game environment, as well as typically a point of view. The game state may also include properties, images, colors and/or textures of objects. The game state is typically maintained based on game rules, as well as game commands such as move, turn, attack, set focus to, interact, use, and/or the like. Part of the game engine is optionally disposed within Game Server 1425. Game Server 1425 may maintain a copy of the state of the game based on game commands received from multiple players using geographically disperse clients. In these cases, the game state is provided by Game Server 1425 to Video Source 1430, wherein a copy of the game state is stored and rendering is performed. Game Server 1425 may receive game commands directly from Clients 1410 via Network 1415, and/or may receive game commands via Video Server System 1420.

Video Source 1430 typically includes rendering logic, e.g., hardware, firmware, and/or software stored on a computer readable medium such as Storage 1455. This rendering logic is configured to create video frames of the video stream based on the game state. All or part of the rendering logic is optionally disposed within a graphics processing unit (GPU). Rendering logic typically includes processing stages configured for determining the three-dimensional spatial relationships between objects and/or for applying appropriate textures, etc., based on the game state and viewpoint. The rendering logic produces raw video that is then usually encoded prior to communication to Clients 1410. For example, the raw video may be encoded according to an Adobe Flash® standard, .wav, H.264, H.263, On2, VP6, VC-1, WMA, Huffyuv, Lagarith, MPG-x. Xvid. FFmpeg, x264, VP6-8, realvideo, mp3, or the like. The encoding process produces a video stream that is optionally packaged for delivery to a decoder on a remote device. The video stream is characterized by a frame size and a frame rate. Typical frame sizes include 800 x 600, 1280 x 720 (e.g., 720p), 1024 x 768, although any other frame sizes may be used. The frame rate is the number of video frames per second. A video stream may include different types of video frames. For example, the H.264 standard includes a "P" frame and a "I" frame. I-frames include information to refresh all macro blocks/pixels on a display device, while P-frames include information to refresh a subset thereof. P-frames are typically smaller in data size than are I-frames. As used herein the term "frame size" is meant to refer to a number of pixels within a frame. The term "frame data size" is used to refer to a number of bytes required to store the frame.

In alternative examples Video Source 1430 includes a video recording device such as a camera. This camera may be used to generate delayed or live video that can be included in the video stream of a computer game. The resulting video stream, optionally includes both rendered images and images recorded using a still or video camera. Video Source 1430 may also include storage devices configured to store previously recorded video to be included in a video stream. Video Source 1430 may also include motion or positioning sensing devices configured to detect motion or position of an object, e.g., person, and logic configured to determine a game state or produce video-based on the detected motion and/or position.

Video Source 1430 is optionally configured to provide overlays configured to be placed on other video. For example, these overlays may include a command interface, log in instructions, messages to a game player, images of other game players, video feeds of other game players (e.g., webcam video). In examples of Client 1410A including a touch screen interface or a gaze detection interface, the overlay may include a virtual keyboard, joystick, touch pad, and/or the like. In one example of an overlay a player's voice is overlaid on an audio stream. Video Source 1430 optionally further includes one or more audio sources.

In examples wherein Video Server System 1420 is configured to maintain the game state based on input from more than one player, each player may have a different point of view comprising a position and direction of view. Video Source 1430 is optionally configured to provide a separate video stream for each player based on their point of view. Further, Video Source 1430 may be configured to provide a different frame size, frame data size, and/or encoding to each of Client 1410. Video Source 1430 is optionally configured to provide 3-D video.

I/O Device 1445 is configured for Video Server System 1420 to send and/or receive information such as video, commands, requests for information, a game state, gaze information, device motion, device location, user motion, client identities, player identities, game commands, security information, audio, and/or the like. I/O Device 1445 typically includes communication hardware such as a network card or modem. I/O Device 1445 is configured to communicate with Game Server 1425, Network 1415, and/or Clients 1410.

Processor 1450 is configured to execute logic, e.g. software, included within the various components of Video Server System 1420 discussed herein. For example, Processor 1450 may be programmed with software instructions in order to perform the functions of Video Source 1430, Game Server 1425, and/or a Client Qualifier 1460. Video Server System 1420 optionally includes more than one instance of Processor 1450. Processor 1450 may also be programmed with software instructions in order to execute commands received by Video Server System 1420, or to coordinate the operation of the various elements of Game System 1400 discussed herein. Processor 1450 may include one or more hardware device. Processor 1450 is an electronic processor.

Storage 1455 includes non-transitory analog and/or digital storage devices. For example, Storage 1455 may include an analog storage device configured to store video frames. Storage 1455 may include a computer readable digital storage, e.g. a hard drive, an optical drive, or solid state storage. Storage 1415 is configured (e.g. by way of an appropriate data structure or file system) to store video frames, artificial frames, a video stream including both video frames and artificial frames, audio frame, an audio stream, and/or the like. Storage 1455 is optionally distributed among a plurality of devices. For example, Storage 1455 is configured to store the software components of Video Source 1430 discussed elsewhere herein. These components may be stored in a format ready to be provisioned when needed.

Video Server System 1420 optionally further comprises Client Qualifier 1460. Client Qualifier 1460 is configured for remotely determining the capabilities of a client, such as Clients 1410A or 1410B. These capabilities can include both the capabilities of Client 1410A itself as well as the capabilities of one or more communication channels between Client 1410A and Video Server System 1420. For example, Client Qualifier 1460 may be configured to test a communication channel through Network 1415.

Client Qualifier 1460 can determine (e.g., discover) the capabilities of Client 1410A manually or automatically. Manual determination includes communicating with a user of Client 1410A and asking the user to provide capabilities. For example, Client Qualifier 1460 is configured to display images, text, and/or the like within a browser of Client 1410A. For example, Client 1410A is an HMD that includes a browser. In another example, client 1410A is a game console having a browser, which may be displayed on the HMD The displayed objects request that the user enter information such as operating system, processor, video decoder type, type of network connection, display resolution, etc. of Client 1410A. The information entered by the user is communicated back to Client Qualifier 1460.

Automatic determination may occur, for example, by execution of an agent on Client 1410A and/or by sending test video to Client 1410A. The agent may comprise computing instructions, such as java script, embedded in a web page or installed as an add-on. The agent is optionally provided by Client Qualifier 1460. For example, the agent can find out processing power of Client 1410A, decoding and display capabilities of Client 1410A, lag time reliability and bandwidth of communication channels between Client 1410A and Video Server System 1420, a display type of Client 1410A, firewalls present on Client 1410A, hardware of Client 1410A, software executing on Client 1410A, registry entries within Client 1410A, and/or the like.

Client Qualifier 1460 includes hardware, firmware, and/or software stored on a computer readable medium. Client Qualifier 1460 is optionally disposed on a computing device separate from one or more other elements of Video Server System 1420. For example, Client Qualifier 1460 is configured to determine the characteristics of communication channels between Clients 1410 and more than one instance of Video Server System 1420. In these examples the information discovered by Client Qualifier can be used to determine which instance of Video Server System 1420 is best suited for delivery of streaming video to one of Clients 1410.

Embodiments of the present disclosure may be practised with various computer system configurations including hand-held devices, microprocessor systems, microprocessor-based or programmable consumer electronics, minicomputers, mainframe computers and the like. The disclosure can also be practised in distributed computing environments where tasks are performed by remote processing devices that are linked through a wire-based or wireless network.

With the above description in mind, it should be understood that the disclosure can employ various computer-implemented operations involving data stored in computer systems. These operations are those requiring physical manipulation of physical quantities. Any of the operations described herein that form part of the disclosure are useful machine operations. The examples discussed above also relate to a device or an apparatus for performing these operations. The apparatus can be specially constructed for the required purpose, or the apparatus can be a general-purpose computer selectively activated or configured by a computer program stored in the computer. In particular, various general-purpose machines can be used with computer programs written in accordance with the teachings herein, or it may be more convenient to construct a more specialized apparatus to perform the required operations.

The techniques discussed above can also be embodied as computer readable code on a computer readable medium. The computer readable medium is any data storage device that can store data, which can thereafter be read by a computer system. Examples of the computer readable medium include hard drives, network attached storage (NAS), read-only memory, random-access memory, CD-ROMs, CD-Rs, CD-RWs, magnetic tapes and other optical and non-optical data storage devices. The computer readable medium can include computer readable tangible medium distributed over a network-coupled computer system so that the computer readable code is stored and executed in a distributed fashion.

Although the method operations were described in a specific order, it should be understood that other housekeeping operations may be performed in between operations, or operations may be adjusted so that they occur at slightly different times, or may be distributed in a system which allows the occurrence of the processing operations at various intervals associated with the processing, as long as the processing of the overlay operations are performed in the desired way.

## Claims

1. A directional interface object (104), comprising:
a top tubular portion (400);
a front tubular portion (402), a top end of the front tubular portion being joined to a first end of the top tubular portion;
a bottom tubular portion (406), a first end of the bottom tubular portion being joined to a bottom end of the front tubular portion;
a rear tubular portion (404), a top end of the rear tubular portion being joined to a second end of the top tubular portion opposite the first end of the top tubular portion, a bottom end of the rear tubular portion being joined to a second end of the bottom tubular portion opposite the first end of the bottom tubular portion;
a trackable object (416) disposed at the first end of the top tubular portion;
a first joystick (418) positioned along the rear-facing side of the front tubular portion;
a second joystick (426) positioned at the second end of the top tubular portion, extending in the rearward direction; and
at least one right front contact sensor (500) positioned along the right side of the front tubular portion, at least one left front contact sensor (502) positioned along the left side of the front tubular portion, at least one right rear contact sensor (504) positioned along the right side of the rear tubular portion and at least one left rear contact sensor (506) positioned along the left side of the rear tubular portion for detecting contact of a user's hand with the right front tubular portion, the left front tubular portion, the right rear tubular portion and the left rear tubular portion, respectively, wherein the contact detected by the at least one right front contact sensor and the at least one left front contact sensor is indicative of whether the front tubular portion is held by the user's left hand or right hand, and the contact detected by the at least one right rear contact sensor and the at least one left rear contact sensor is indicative of whether the rear tubular portion is held by the user's left hand or right hand, the touch sensors on left and right sides of a tubular portion being configured to be held by the user's hand providing a detection of an amount of contact indicative of the number of fingers touching those touch sensors.

2. The directional interface object of claim 1,
wherein the front tubular portion is aligned along a first axis,
wherein the rear tubular portion is aligned along a second axis that is substantially not parallel with the first axis, wherein the bottom tubular portion is aligned along a third axis;
wherein the front tubular portion extends away from the bottom tubular portion along the first axis at a first angle relative to normal to the third axis; and
wherein the rear tubular portion extends away from the bottom tubular portion along the second axis at a second angle relative to normal to the third axis, the second angle being less than the first angle.

3. The directional interface object of claim 1,
wherein the top tubular portion is aligned along a first axis;
wherein the bottom tubular portion is aligned along a second axis that is substantially not parallel with the first axis, wherein the top tubular portion extends away from the rear tubular portion along the first axis in a first direction; and
wherein the bottom tubular portion extends away from the rear tubular portion along the second axis in a second direction that diverges from the first direction.

4. The directional interface object of claim 1, wherein the trackable object has a substantially spherical shape.

5. The directional interface object of claim 1, wherein the trackable object is defined from a translucent material and further includes a light for illuminating the translucent material.

6. The directional interface object of claim 1, further comprising at least one inertial sensor for sensing movement of the directional interface object.

7. A system, comprising:
the directional interface object according to claim 1, the directional interface object including at least one inertial sensor configured to generate inertial data indicative of movement of the directional interface object;
an image capture device (108) configured to capture images of an interactive environment in which the directional interface object is disposed; and
a computing device (106) configured to execute an interactive application to render a view of a virtual environment to a head-mounted display (HMD), the computing device configured to process the captured images and the inertial data to determine a position of a virtual object that is rendered in the view of the virtual environment, the computing device being configured to render a virtual hand in the virtual environment based on an estimate of the number of fingers touching the touch sensors in response to the detected amount of contact.

8. The system of claim 7,
wherein the front tubular portion is aligned along a first axis, and
wherein the rear tubular portion is aligned along a second axis that is substantially not parallel with the first axis;
wherein the bottom tubular portion is aligned along a third axis;
wherein the front tubular portion extends away from the bottom tubular portion along the first axis at a first angle relative to normal to the third axis;
wherein the rear tubular portion extends away from the bottom tubular portion along the second axis at a second angle relative to normal to the third axis, the second angle being less than the first angle.

## Patentansprüche

1. Richtungsschnittstellenobjekt (104), umfassend:
einen oberen rohrförmigen Abschnitt (400);
einen vorderen rohrförmigen Abschnitt (402), wobei ein oberes Ende des vorderen rohrförmigen Abschnitts mit einem ersten Ende des oberen rohrförmigen Abschnitts verbunden ist;
einen unteren rohrförmigen Abschnitt (406), wobei ein erstes Ende des unteren rohrförmigen Abschnitts mit einem unteren Ende des vorderen rohrförmigen Abschnitts verbunden ist;
einen hinteren rohrförmigen Abschnitt (404), wobei ein oberes Ende des hinteren rohrförmigen Abschnitts mit einem zweiten Ende des oberen rohrförmigen Abschnitts gegenüber dem ersten Ende des oberen rohrförmigen Abschnitts verbunden ist, ein unteres Ende des hinteren rohrförmigen Abschnitts mit einem zweiten Ende des unteren rohrförmigen Abschnitts gegenüber dem ersten Ende des unteren rohrförmigen Abschnitts verbunden ist;
ein verfolgbares Objekt (416), das am ersten Ende des oberen rohrförmigen Abschnitts angeordnet ist;
einen ersten Joystick (418), der entlang der nach hinten gerichteten Seite des vorderen rohrförmigen Abschnitts positioniert ist;
einen zweiten Joystick (426), der am zweiten Ende des oberen rohrförmigen Abschnitts positioniert ist und sich in die Richtung nach hinten erstreckt; und
mindestens einen rechten vorderen Berührungssensor (500), der entlang der rechten Seite des vorderen röhrenförmigen Abschnitts positioniert ist, mindestens einen linken vorderen Berührungssensor (502), der entlang der linken Seite des vorderen röhrenförmigen Abschnitts positioniert ist, mindestens einen rechten hinteren Berührungssensor (504), der entlang der rechten Seite des hinteren röhrenförmigen Abschnitts positioniert ist, und mindestens einen linken hinteren Berührungssensor (506), der entlang der linken Seite des hinteren röhrenförmigen Abschnitts positioniert ist, um eine Berührung der Hand eines Benutzers mit dem rechten vorderen röhrenförmigen Abschnitt, dem linken vorderen röhrenförmigen Abschnitt, dem rechten hinteren röhrenförmigen Abschnitt bzw. dem linken hinteren röhrenförmigen Abschnitt zu erkennen, wobei die durch den mindestens einen rechten vorderen Berührungssensor und dem mindestens einen linken vorderen Berührungssensor erkannte Berührung anzeigt, ob der vordere rohrförmige Abschnitt durch die linke Hand oder die rechte Hand des Benutzers gehalten wird, und die durch den mindestens einen rechten hinteren Berührungssensor und den mindestens einen linken hinteren Berührungssensor erkannte Berührung anzeigt, ob der hintere rohrförmige Abschnitt durch die linke Hand oder die rechte Hand des Benutzers gehalten wird, wobei die Berührungssensoren an der linken und rechten Seite eines rohrförmigen Abschnitts dazu ausgelegt sind, durch die Hand des Benutzers gehalten zu werden und eine Erkennung eines Berührungsbetrags zu liefern, die die Anzahl der Finger angibt, die diese Berührungssensoren berühren.

2. Richtungsschnittstellenobjekt gemäß Anspruch 1, wobei der vordere rohrförmige Abschnitt entlang einer ersten Achse ausgerichtet ist,
wobei der hintere rohrförmige Abschnitt entlang einer zweiten Achse ausgerichtet ist, die im Wesentlichen nicht parallel zur ersten Achse verläuft, wobei der untere rohrförmige Abschnitt entlang einer dritten Achse ausgerichtet ist; wobei sich der vordere rohrförmige Abschnitt von dem unteren rohrförmigen Abschnitt entlang der ersten Achse in einem ersten Winkel relativ zur Normalen zur dritten Achse weg erstreckt; und
wobei sich der hintere rohrförmige Abschnitt von dem unteren rohrförmigen Abschnitt entlang der zweiten Achse in einem zweiten Winkel relativ zur Normalen zur dritten Achse weg erstreckt, wobei der zweite Winkel kleiner als der erste Winkel ist.

3. Richtungsschnittstellenobjekt gemäß Anspruch 1,
wobei der obere rohrförmige Abschnitt entlang einer ersten Achse ausgerichtet ist;
wobei der untere rohrförmige Abschnitt entlang einer zweiten Achse ausgerichtet ist, die im Wesentlichen nicht parallel zur ersten Achse verläuft, wobei sich der obere rohrförmige Abschnitt von dem hinteren rohrförmigen Abschnitt entlang der ersten Achse in einer ersten Richtung weg erstreckt; und
wobei sich der untere rohrförmige Abschnitt von dem hinteren rohrförmigen Abschnitt entlang der zweiten Achse in einer zweiten Richtung weg erstreckt, die von der ersten Richtung abweicht.

4. Richtungsschnittstellenobjekt gemäß Anspruch 1, wobei das verfolgbare Objekt eine im Wesentlichen kugelförmige Form aufweist.

5. Richtungsschnittstellenobjekt gemäß Anspruch 1, wobei das verfolgbare Objekt aus einem lichtdurchlässigen Material definiert ist und ferner eine Leuchte zum Beleuchten des lichtdurchlässigen Materials enthält.

6. Richtungsschnittstellenobjekt gemäß Anspruch 1, ferner umfassend mindestens einen Trägheitssensor zum Erkennen der Bewegung des Richtungsschnittstellenobjekts.

7. System, umfassend:
das Richtungsschnittstellenobjekt gemäß Anspruch 1, wobei das Richtungsschnittstellenobjekt mindestens einen Trägheitssensor enthält, der dazu ausgelegt ist, Trägheitsdaten zu erzeugen, die eine Bewegung des Richtungsschnittstellenobjekts angeben;
eine Bilderfassungsvorrichtung (108), die dazu ausgelegt ist, eine interaktive Umgebung zu erkennen, in der das Richtungsschnittstellenobjekt angeordnet ist; und
eine Rechenvorrichtung (106), die dazu ausgelegt ist, eine interaktive Anwendung auszuführen, um eine Ansicht einer virtuellen Umgebung auf ein am Kopf getragenes Display (HMD) zu rendern, wobei die Rechenvorrichtung dazu ausgelegt ist, die erfassten Bilder und die Trägheitsdaten zu verarbeiten, um eine Position eines virtuellen Objekts zu bestimmen, das in der Ansicht der virtuellen Umgebung gerendert wird, wobei die Rechenvorrichtung dazu ausgelegt ist, eine virtuelle Hand in der virtuellen Umgebung basierend auf einer Schätzung der Anzahl der Finger, die die Berührungssensoren berühren, als Reaktion auf den erkannten Betrag der Berührung rendert.

8. System gemäß Anspruch 7,
wobei der vordere rohrförmige Abschnitt entlang einer ersten Achse ausgerichtet ist, und
wobei der hintere rohrförmige Abschnitt entlang einer zweiten Achse ausgerichtet ist, die im Wesentlichen nicht parallel zur ersten Achse verläuft;
wobei der untere rohrförmige Abschnitt entlang einer dritten Achse ausgerichtet ist;
wobei sich der vordere rohrförmige Abschnitt von dem unteren rohrförmigen Abschnitt entlang der ersten Achse in einem ersten Winkel relativ zur Normalen zur dritten Achse weg erstreckt;
wobei sich der hintere rohrförmige Abschnitt von dem unteren rohrförmigen Abschnitt entlang der zweiten Achse in einem zweiten Winkel relativ zur Normalen zur dritten Achse weg erstreckt, wobei der zweite Winkel kleiner als der erste Winkel ist.

## Revendications

1. Objet à interface directionnelle (104), comprenant :
une partie tubulaire supérieure (400) ;
une partie tubulaire avant (402), une extrémité supérieure de la partie tubulaire avant étant reliée à une première extrémité de la partie tubulaire supérieure ;
une partie tubulaire inférieure (406), une première extrémité de la partie tubulaire inférieure étant reliée à une extrémité inférieure de la partie tubulaire avant ;
une partie tubulaire arrière (404), une extrémité supérieure de la partie tubulaire arrière étant reliée à une seconde extrémité de la partie tubulaire supérieure opposée à la première extrémité de la partie tubulaire supérieure, une extrémité inférieure de la partie tubulaire arrière étant reliée à une seconde extrémité de la partie tubulaire inférieure opposée à la première extrémité de la partie tubulaire inférieure ;
un objet traçable (416) disposé à la première extrémité de la partie tubulaire supérieure ;
un premier levier de commande (418) positionné le long du côté orienté vers l'arrière de la partie tubulaire avant ;
un second levier de commande (426) positionné à la seconde extrémité de la partie tubulaire supérieure, s'étendant dans la direction arrière ; et
au moins un capteur de contact avant droit (500) positionné le long du côté droit de la partie tubulaire avant, au moins un capteur de contact avant gauche (502) positionné le long du côté gauche de la partie tubulaire avant, au moins un capteur de contact arrière droit (504) positionné le long du côté droit de la partie tubulaire arrière et au moins un capteur de contact arrière gauche (506) positionné le long du côté gauche de la partie tubulaire arrière pour détecter le contact de la main d'un utilisateur avec respectivement la partie tubulaire avant droite, la partie tubulaire avant gauche, la partie tubulaire arrière droite et la partie tubulaire arrière gauche, le contact détecté par l'au moins un capteur de contact avant droit et l'au moins un capteur de contact avant gauche indiquant si la partie tubulaire avant est tenue par la main gauche ou la main droite de l'utilisateur, et le contact détecté par l'au moins un capteur de contact arrière droit et l'au moins un capteur de contact arrière gauche indiquant si la partie tubulaire arrière est tenue par la main gauche ou la main droite de l'utilisateur, les capteurs tactiles sur les côtés gauche et droit d'une partie tubulaire étant configurés pour être tenus par la main de l'utilisateur fournissant une détection d'une quantité de contact indicative du nombre de doigts touchant ces capteurs tactiles.

2. Objet à interface directionnelle selon la revendication 1,
la partie tubulaire avant étant alignée le long d'un premier axe,
la partie tubulaire arrière étant alignée le long d'un deuxième axe qui n'est sensiblement pas parallèle au premier axe, la partie tubulaire inférieure étant alignée le long d'un troisième axe ;
la partie tubulaire avant s'étendant à l'écart de la partie tubulaire inférieure le long du premier axe selon un premier angle par rapport à la normale au troisième axe ; et
la partie tubulaire arrière s'étendant à l'écart de la partie tubulaire inférieure le long du deuxième axe selon un second angle par rapport à la normale au troisième axe, le second angle étant inférieur au premier angle.

3. Objet à interface directionnelle selon la revendication 1,
la partie tubulaire supérieure étant alignée le long d'un premier axe ;
la partie tubulaire inférieure étant alignée le long d'un deuxième axe qui n'est sensiblement pas parallèle au premier axe, la partie tubulaire supérieure s'étendant à l'écart de la partie tubulaire arrière le long du premier axe dans une première direction ; et
la partie tubulaire inférieure s'étendant à l'écart de la partie tubulaire arrière le long du deuxième axe dans une seconde direction qui diverge de la première direction.

4. Objet à interface directionnelle selon la revendication 1, l'objet traçable ayant une forme sensiblement sphérique.

5. Objet à interface directionnelle selon la revendication 1, l'objet traçable étant défini à partir d'un matériau translucide et comprenant en outre une lumière pour éclairer le matériau translucide.

6. Objet à interface directionnelle selon la revendication 1, comprenant en outre au moins un capteur inertiel pour détecter le mouvement de l'objet à interface directionnelle.

7. Système, comprenant :
l'objet à interface directionnelle selon la revendication 1, l'objet à interface directionnelle comprenant au moins un capteur inertiel configuré pour générer des données inertielles indicatives du mouvement de l'objet à interface directionnelle ;
un dispositif de capture d'images (108) configuré pour capturer des images d'un environnement interactif dans lequel l'objet à interface directionnelle est disposé ; et
un dispositif informatique (106) configuré pour exécuter une application interactive pour rendre une vue d'un environnement virtuel à un visiocasque (HMD), le dispositif informatique étant configuré pour traiter les images capturées et les données inertielles afin de déterminer une position d'un objet virtuel qui est rendu dans la vue de l'environnement virtuel, le dispositif informatique étant configuré pour rendre une main virtuelle dans l'environnement virtuel sur la base d'une estimation du nombre de doigts touchant les capteurs tactiles en réponse à la quantité détectée de contact.

8. Système selon la revendication 7,
la partie tubulaire avant étant alignée le long d'un premier axe, et la partie tubulaire arrière étant alignée le long d'un deuxième axe qui n'est sensiblement pas parallèle au premier axe ;
la partie tubulaire inférieure étant alignée le long d'un troisième axe ;
la partie tubulaire avant s'étendant à l'écart de la partie tubulaire inférieure le long du premier axe selon un premier angle par rapport à la normale au troisième axe ;
la partie tubulaire arrière s'étendant à l'écart de la partie tubulaire inférieure le long du deuxième axe selon un second angle par rapport à la normale au troisième axe, le second angle étant inférieur au premier angle.
